(19) Europäisches Patentamt
European Patent Office
Office européen des brevets

(11) Numéro de publication: **0 360 656 B1**

(12) # FASCICULE DE BREVET EUROPEEN

(45) Date de publication de fascicule du brevet: **05.01.94**

(51) Int. Cl.⁵: **C08L 95/00**, C10C 3/02, //(C08L95/00,53:02)

(21) Numéro de dépôt: **89402453.8**

(22) Date de dépôt: **08.09.89**

Le dossier contient des informations techniques présentées postérieurement au dépôt de la demande et ne figurant pas dans le présent fascicule.

(54) **Procédé de préparation de compositions bitume-polymère.**

(30) Priorité: **09.09.88 FR 8811825**

(43) Date de publication de la demande:
**28.03.90 Bulletin 90/13**

(45) Mention de la délivrance du brevet:
**05.01.94 Bulletin 94/01**

(84) Etats contractants désignés:
**AT BE CH DE ES FR GB GR IT LI LU NL SE**

(56) Documents cités:
**EP-A- 0 029 982**
**EP-A- 0 096 638**
**WO-A-89/12079**
**GB-A- 2 025 986**
**US-A- 3 751 389**

(73) Titulaire: **ELF ANTAR FRANCE**
**Tour Elf**
**2, Place de la Coupole**
**La Défense 6**
**F-92400 Courbevoie(FR)**

(72) Inventeur: **Planche, Jean-Pascal**
**13, rue Boileau**
**F-69006 Lyon(FR)**
Inventeur: **Travers, François**
**22, rue Salvador Allende**
**F-42350 La Talaudière(FR)**
Inventeur: **Zins, Annie**
**La Rivoire**
**F-38200 Seyssuel(FR)**

(74) Mandataire: **Boillot, Marc**
**Elf Aquitaine Production**
**Département Propriété Industrielle**
**Tour Elf**
**Cédex 45**
**F-92078 Paris La Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 360 656 B1

## Description

### Description pour les Etats contractants suivants : AT, BE, CH, DE, FR, GB, IT, LI, LU, NL, SE

L'invention concerne un procédé de préparation de compositions bitume-polymère. Elle se rapporte encore à l'application des compositions obtenues à la réalisation de revêtements et en particulier de revêtements superficiels routiers, d'enrobés ou encore de revêtements d'étanchéité, et a trait également à une solution mère de polymère utilisable pour l'obtention desdites compositions.

Il est connu d'utiliser des compositions bitumineuses comme revêtements de surfaces diverses et en particulier comme enduits superficiels routiers à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :

- point de ramollissement, exprimé en °C et déterminé par l'essai Bille et Anneau défini par la norme NFT 66 008,
- point de fragilité ou point de Fraass, exprimé en °C et déterminé selon la norme IP 80/53,
- pénétration, exprimée en 1/10 de mm et déterminée selon la norme NFT 66 004,
- caractéristiques rhéologiques en traction déterminées selon la norme NFT 46 002 et comportant les grandeurs :
  - Contrainte au seuil $\sigma s$ en bars
  - allongement au seuil $\epsilon s$ en %
  - contrainte à la rupture $\sigma r$ en bars
  - allongement à la rupture $\epsilon r$ en %

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume-polymère ayant des qualités mécaniques améliorées par rapport à celles des bitumes seuls.

Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylate, polychloroprène, terpolymère éthylène/propylène/diène (EPDM), polynorbornène, ou encore copolymères statistiques ou séquencés de styrène et d'un diène conjugué.

Parmi les polymères ajoutés aux bitumes, les copolymères statistiques ou séquencés de styrène et d'un diène conjugué et notamment de styrène et de butadiène ou de styrène et d'isoprène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume-polymère peut être améliorée par couplage chimique du polymère au bitume, cette amélioration permettant en outre d'élargir le domaine d'utilisation des compositions bitume-polymère.

Des compositions bitume-polymère pour lesquelles un copolymère statistique ou séquencé de styrène ou d'un diène conjugué tel que butadiène ou isoprène est couplé au bitume peuvent être préparées en faisant appel aux procédés décrits dans les citations FR-A-2376188; FR-A-2429241 et FR-A-2528439. Dans ces procédés, on incorpore ledit copolymère et une source de soufre au bitume, en opérant entre 130°C et 230°C et sous agitation, puis l'on maintient le mélange ainsi formé sous agitation et à une température entre 130°C et 230°C pendant au moins quinze minutes. La source de soufre consiste en soufre chimiquement non lié (FR-A-2376188 et FR-A-2429241) ou en un polysulfure (FR-A-2528439) et l'incorporation du copolymère et de la source de soufre au bitume est réalisée soit par addition directe desdits ingrédients au bitume (FR-A-2376188 et FR-A-2528439) ou bien en préparant tout d'abord une solution mère du copolymère et de la source de soufre dans une huile hydrocarbonée, puis en ajoutant ladite solution mère au bitume (FR-A-2429241 et FR-A-2528439).

Comme il ressort de la citation FR-A-2,429,241 (page 4, lignes 10-12) ou de la citation correspondante GB-A-2,025,986 (page 2, lignes 30-31), l'action du soufre peut être renforcée en présence d'accélérateurs de vulcanisation tels que mercapto-2 benzothiazole ou o-tolylguanidine ou de composés activateurs tels que le stéarate de zinc, c'est-à-dire de produits non donneurs de soufre.

On a maintenant trouvé que l'on pouvait encore améliorer substantiellement les caractéristiques mécaniques et la stabilité des compositions bitume-polymère pour lesquelles un copolymère séquencé de styrène ou d'un diène conjugué, notamment butadiène et isoprène, est couplé au bitume sous l'action d'un agent de couplage jouant le rôle de donneur de soufre, si ledit agent de couplage renfermait au moins un accélérateur de vulcanisation jouant directement le rôle de donneur de soufre. En particulier, les caractéristiques mécaniques statiques, déterminées notamment par essai de traction, sont améliorées à basse température et sont conservées dans une large mesure après vieillissement simulé. Cette conservation des caractéristiques constitue un gage de constance de la qualité des compositions bitume-polymère, qui sont le plus souvent préparées par campagne et donc stockées à haute température pendant une durée plus ou moins longue avant utilisation.

La demande de brevet Européen n°88401558 du 21.06.1988 (publication n°0299820 du 18.01.1989) concerne une composition de vulcanisation utilisable pour la vulcanisation d'un élastomère, notamment un copolymère triséquencé styrène/butadiène/styrène, mélangé à un bitume. Cette composition comprend, en poids, 0,5 à 3 parties de mercaptobenzothiazole, 0,5 à 3 parties de disulfure de tétraméthylthiurame, 3 à 5 parties de ZnO, 1 à 3 parties d'acide stéarique, 1 à 4 parties d'antioxydant et 1 à 5 parties d'un agent de vulcanisation composé de 0 à 100% de soufre sublimé, 0 à 75% d'un donneur de soufre choisi parmi les thiurames et les dithiomorpholines et 0 à 50% d'un sulfénamide, le rapport pondéral du sulfénamide au donneur de soufre allant de 1:3 à 1:1.

La demande internationale de brevet PCT/BE89/00026 du 09.06.1989 (publication n°W089/12079 du 14.12.1989) et la demande de brevet Européen n°89907645 qui en découle (publication n°0424420) concernent un procédé de production de compositions bitume-caoutchouc, dans lequel on met en contact, à une température comprise entre 140 °C et 200 °C, un bitume de pénétration comprise entre 20 et 320, un polymère caoutchouteux, par exemple un polymère bloc de styrène et de butadiène ou d'isoprène, un agent de couplage formé d'un dérivé sulfuré du type disulfure ou dithiocarbamate et de soufre élémentaire, dans un rapport pondéral dérivé sulfuré: soufre élémentaire compris entre 40:60 et 80:20, et éventuellement un composé alcalin soluble dans le bitume.

L'invention a pour objet un procédé de préparation de compositions bitume-polymère, dans lequel on réalise, à une température comprise entre 100 °C et 230 °C, un mélange de bitume avec un copolymère séquencé de styrène et d'un diène conjugué, utilisé en quantité allant de 0,5 à 15% en poids du bitume, et un agent de couplage renfermant un compose donneur de soufre et l'on maintient le mélange obtenu, dans ledit intervalle de température et sous agitation, pendant une durée d'au moins dix minutes, caractérisé en ce que l'agent de couplage est choisi parmi les produits M, qui sont constitués, en poids, de 1% à 100% d'une composante A consistant en un ou plusieurs accélérateurs de vulcanisation donneurs de soufre et en 99% à 0% d'une composante B consistant en un ou plusieurs agents de vulcanisation choisis parmi le soufre élémentaire et les polysulfures d'hydrocarbyle, et en ce que ledit agent de couplage est utilisé en proportion propre à fournir une quantité de soufre représentant, en poids, 0,5% à 10% et plus particulièrement 1% à 8% du copolymère utilisé pour produire la composition bitume-polymère, sous réserve qu'aucun composé alcalin soluble dans le bitume ne soit ajouté au milieu réactionnel lorsque l'agent de couplage consiste en un mélange d'un accélérateur de vulcanisation donneur de soufre du type disulfure et de soufre élémentaire, dans un rapport pondéral accélérateur : soufre compris entre 40:60 et 80:20.

En particulier les produits M, parmi lesquels peut être choisi l'agent de couplage consistent, en poids, en 10% à 100% de la composante A et 90 à 0% de la composante B.

Les accélérateurs de vulcanisation donneurs de soufre utilisable pour former la composante A du produit M peuvent être choisis, en particulier, parmi les polysulfures de thiurame de formule générale

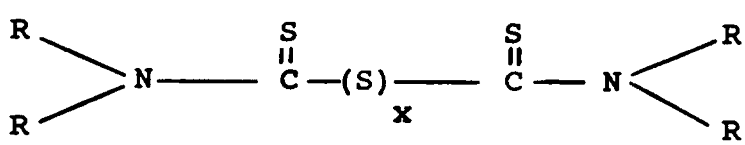

dans laquelle les R, identiques ou différents, représentent chacun un radical hydrocarboné en $C_1$ à $C_{12}$ et de préférence en $C_1$ à $C_8$, notamment un radical alcoyle, cycloalcoyle ou aryle, ou bien deux radicaux R fixés à un même atome d'azote sont reliés entre eux pour former un radical divalent hydrocarboné en $C_2$ à $C_8$ et x est un nombre allant de 2 à 8. Comme exemples de tels accélérateurs de vulcanisation on peut citer notamment les composés disulfure de dipentaméthylènethiurame, tétrasulfure de dipentaméthylènethiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre utilisables pour former la composante A du produit M, on peut encore citer les disulfures d'alcoylphénols, le disulfure de morpholine et le N, N'-disulfure de caprolactame.

Parmi les divers mélanges susceptibles de constituer des agents de couplage selon l'invention, on préfère ceux qui conduisent à une vulcanisation rapide et qui limitent le risque de prévulcanisation.

Comme indiqué précédemment, la composante B de l'agent de couplage consiste en un ou plusieurs agents de vulcanisation choisi parmi le soufre élémentaire et les polysulfures d'hydrocarbyle.

Avantageusement le soufre utilisé est du soufre en fleur et de préférence du soufre cristallisé orthorhombique connu sous le nom de soufre alpha. En particulier, la composante B du produit M consiste en soufre cristallisé orthorhombique.

Les polysulfures d'hydrocarbyle susceptibles d'être utilisés comme agent de vulcanisation dans la composante B du produit M ou dans le produit D répondent à la formule générale

$$R_1 - (S)_m - (R_3 - (S)_m )_r - R_2$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé ou insaturé, formant un cycle avec les autres groupements d'atomes associés dans la formule, $R_3$ est un radical hydrocarboné divalent, saturé ou insaturé, en $C_1$ à $C_{20}$, les - $(S)_m$ - représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2, et r représente un nombre entier prenant les valeurs de zéro à 10.

Dans la formule précitée, les radicaux hydrocarbonés monovalents $R_1$ et $R_2$ en $C_1$ à $C_{20}$ ainsi que le radical hydrocarboné divalent $R_3$ en $C_1$ à $C_{20}$ sont choisis notamment parmi les radicaux aliphatiques, alicycliques ou aromatiques. Lorsque les radicaux $R_1$ et $R_2$ sont reliés entre eux pour constituer un radical hydrocarboné divalent en $C_1$ à $C_{20}$ formant un cycle avec les autres groupements d'atomes associés dans la formule, ledit radical divalent est similaire au radical R et peut être également du type aliphatique, alicyclique, ou aromatique. En particulier les radicaux $R_1$ et $R_2$ sont identiques et choisis parmi les radicaux alcoyles en $C_1$ à $C_{20}$, par exemple éthyle, propyle, hexyle, octyle, nonyle, décyle, dodécyle linéaire, tertio-dodécyle, hexadécyle, octadécyle et les radicaux cycloalcoyles et aryles en $C_6$ à $C_{20}$, notamment benzyle, phényle, tolyle, cyclohexyle, tandis que le radical $R_3$ ou le radical divalent formé par la réunion de $R_1$ et $R_2$ sont choisis parmi les radicaux alcoylènes en $C_1$ à $C_{20}$ ou les radicaux cycloalcoylènes ou arylènes, notamment phénylène, tolylène, cyclohexylène, en $C_6$ à $C_{20}$.

Des polysulfures utilisables suivant l'invention sont en particulier ceux définis par la formule

$$R_1 - (S)_n - R_2$$

dans laquelle $R_1$ et $R_2$ désignent chacun un radical hydrocarboné monovalent, saturé ou insaturé, en $C_1$ à $C_{20}$ ou sont reliés entre eux pour former un radical divalent $R_3$ en $C_1$ à $C_{20}$, $R_1$, $R_2$ et $R_3$ ayant les significations précédentes, - $(S)_n$ - représente un groupement divalent formé par un enchaînement de n atomes de soufre, n étant un nombre entier allant de 2 à 6.

Des polysulfures préférés répondent à la formule générale

$R_4$ - $(S)_p$ - $R_4$, dans laquelle $R_4$ désigne un radical alcoyle en $C_6$ à $C_{16}$, et - $(S)_p$ - représente un groupement divalent formé par un enchaînement de p atomes de soufre, p étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécyle, pentasulfure de dihexyle, pentasulfure de dioctyle, pentasulfure de dinonyle, pentasulfure de ditertiododécyle, pentasulfure de dihexadécyle.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Le bitume, qui constitue la partie majoritaire des compositions bitume-polymère suivant l'invention, est choisi parmi les divers bitumes ayant une pénétration, définie suivant la norme NFT 66004, comprise entre 5 et 500 et de préférence entre 20 et 400. De tels bitumes peuvent être, en particulier, des bitumes de distillation directe ou de distillation sous pression réduite, ou encore des bitumes soufflés ou semi-soufflés, ayant une pénétration comprise dans les intervalles précités.

Le copolymère de styrène et d'un diène conjugué, utilisé dans la préparation de la composition bitume-polymère, est choisi avantageusement parmi les copolymères séquencés de styrène et de butadiène, de styrène et d'isoprène, de styrène et de chloroprène, de styrène et de butadiène carboxylé, et de styrène et

d'isoprène carboxylé. Le copolymère de styrène et de diène conjugué, et en particulier chacun des copolymères précités, a une teneur pondérale en styrène allant de préférence de 15 % à 40 %. La masse moléculaire viscosimétrique moyenne du copolymère de styrène et de diène conjugué, et en particulier celle des copolymères mentionnés ci-dessus, peut être comprise avantageusement entre 30.000 et 300.000 et se situe de préférence entre 70.000 et 200.000.

Le copolymère de styrène et de diène conjugué est choisi de préférence parmi les copolymères di-ou triséquencés de styrène et de butadiène, de styrène et d'isoprène, de styrène et de butadiène carboxylé, de styrène et d'isoprène carboxylé ayant des teneurs en styrène et des masses moléculaires situées dans les intervalles définis précédemment.

La quantité préférée de copolymère ajoutée au bitume est comprise entre 0,7 et 10 % en poids du bitume.

Dans une forme préférée de mise en oeuvre du procédé suivant l'invention, le copolymère et l'agent de couplage sont incorporés au bitume sous la forme d'une solution mère de ces deux produits dans un solvant consistant en une huile hydrocarbonée, qui présente un intervalle de distillation à pression atmosphérique, déterminé selon la norme ASTM D 86-67, compris entre 100 °C et 450 °C et situé plus particulièrement entre 150 °C et 370 °C.

Cette huile hydrocarbonée, qui peut être notamment une coupe pétrolière de caractère aromatique, une coupe pétrolière de caractère naphténo-paraffinique, une coupe pétrolière de caractère paraffinique, une coupe pétrolière de caractère naphténo-aromatique, une huile de houille ou encore une huile d'origine végétale, est suffisamment "lourde" pour limiter l'évaporation au moment de l'addition de la solution mère au bitume et en même temps suffisamment "légère" pour être éliminée au maximum après répandage de la composition bitume-polymère la contenant de manière à retrouver les mêmes propriétés mécaniques qu'aurait présentées, après répandage à chaud, la composition bitume-polymère préparée sans faire appel à la technique de la solution mère.

La solution mère est préparée par mise en contact des ingrédients la composant, à savoir huile hydrocarbonée servant de solvant, copolymère, et agent de couplage, sous agitation, à des températures comprises entre 20 et 170 °C et plus particulièrement entre 40 et 120 °C, pendant un temps suffisant, par exemple d'environ 30 minutes à environ 90 minutes, pour obtenir une dissolution complète du copolymère et de l'agent de couplage dans l'huile hydrocarbonée.

Les concentrations respectives du copolymère et de l'agent de couplage dans la solution mère peuvent varier assez largement en fonction notamment de la nature de l'huile hydrocarbonée utilisée pour dissoudre le copolymère et l'agent de couplage. Ainsi les quantités respectives de copolymère et d'agent de couplage peuvent représenter avantageusement 5 % à 40 % et 0,02 à 15 % du poids de l'huile hydrocarbonée. Une solution mère préférée renferme, comptés en poids de l'huile hydrocarbonée employée comme solvant, 10 à 35 % de copolymère et 0,1 à 5 % d'agent de couplage.

Lorsque les compositions suivant l'invention sont formées directement à partir des ingrédients bitume, copolymère, et agent de couplage, on opère de préférence en mettant tout d'abord en contact le copolymère avec le bitume, dans les proportions choisies, à une température comprise entre 100 °C et 230 °C et sous agitation, pendant une durée suffisante, généralement de l'ordre de quelques dizaines de minutes à quelques heures, pour former un mélange homogène, puis on ajoute l'agent de couplage au mélange obtenu et maintient le tout sous agitation à une température comprise entre 100 °C et 230 °C, par exemple correspondant à la température de mise en contact du copolymère avec le bitume, pendant une durée au moins égale à 10 minutes, et généralement allant de 10 à 90 minutes, pour permettre à l'agent de couplage de libérer du soufre radicalaire et au soufre radicalaire ainsi produit d'initier d'une part le greffage du copolymère au bitume et d'autre part le pontage des chaînes dudit copolymère entre elles.

Les quantités de copolymère mise en contact avec le bitume et d'agent de couplage ajoutée ensuite au mélange homogène de bitume et dudit copolymère sont choisies pour être comprises dans les intervalles définis précédemment pour ces quantités.

Pour préparer les compositions bitume-polymère suivant l'invention en faisant appel à la technique de la solution mère, on mélange la solution mère du copolymère et de l'agent de couplage avec le bitume, en opérant à une température comprise entre 100 °C et 230 °C et sous agitation, ceci étant effectué par exemple en ajoutant la solution mère au bitume maintenu sous agitation à la température entre 100 °C et 230 °C, puis on maintient le mélange résultant sous agitation à une température comprise entre 100 °C et 230 °C, par exemple à la température utilisée pour le mélange de la solution mère au bitume, pendant une durée au moins égale à 10 minutes, et généralement allant de 10 à 90 minutes, pour permettre, par le biais de l'agent de couplage, le greffage du copolymère aux asphaltènes du bitume et le pontage des chaînes dudit copolymère entre elles.

La quantité de solution mère mélangée au bitume est choisie pour fournir les quantités désirées, par rapport au bitume, de copolymère et d'agent de couplage lesdites quantités étant dans les fourchettes définies précédemment.

Une forme de mise en oeuvre particulièrement préférée pour la préparation de compositions bitume-polymère suivant l'invention par la technique de la solution mère consiste à mettre en contact, à une température comprise entre 100 °C et 230 °C et sous agitation, de 80 à 95 % en poids du bitume avec 20 à 5 % en poids de la solution mère, cette dernière renfermant, en poids de l'huile hydrocarbonée servant de solvant, 10 à 35 % de copolymère de styrène et de diène conjugué et 0,1 à 5 % d'agent de couplage, puis à maintenir le mélange ainsi obtenu sous agitation à une température comprise entre 100 °C et 230 °C, et de préférence à la température utilisée pour la mise en contact du bitume avec la solution mère, pendant une durée au moins égale à 10 minutes, et de préférence comprise entre 10 et 60 minutes.

Les compositions de bitume-polymère obtenues par le procédé suivant l'invention sont utilisables pour la réalisation de revêtements divers, et en particulier de revêtements superficiels routiers. Pour cette application notamment, les compositions bitume-polymère de l'invention préparées par la technique de la solution mère sont tout particulièrement adaptées, car elles sont directement utilisables par les moyens classiques de répandage.

L'invention est illustrée par les exemples suivants donnés à titre non limitatif.

Les caractéristiques rhéologiques et mécaniques des bitumes ou des compositions bitume-polymère auxquelles on fait référence dans ces exemples sont celles définies précédemment, à savoir, pénétration, point de ramollissement, point de Fraas et caractéristiques rhéologiques par traction.

EXEMPLE 1 :

Préparation d'une composition bitume-polymère témoin par incorporation directe du copolymère et de l'agent de couplage au bitume.

En opérant à 170 °C sous agitation, on mélangeait 1.000 parties en poids d'un bitume de distillation directe ayant une pénétration de 82, un point de ramollissement Bille et Anneau de 48 °C, un point de Fraas égal à - 18,5 °C et une viscosité cinématique à 160 °C de $1{,}7 \times 10^{-4} m^2/s$ avec 31 parties en poids d'un copolymère diséquencé de styrène et de butadiène présentant une masse moléculaire moyenne viscosimétrique égale à environ 75.000 et renfermant 25 % en poids de styrène.

Après 3 heures 10 minutes de mélange sous agitation, on obtenait une masse homogène.

A cette masse maintenue à 170 °C, on ajoutait alors 1 partie en poids de soufre cristallisé et on agitait encore l'ensemble pendant 60 minutes pour former la composition bitume-polymère.

Dans le tableau I on donne les principales caractéristiques de la composition bitume-polymère ainsi obtenue avant et après l'avoir soumise à l'essai de vieillissement dit "Rolling Film Oven Test" défini dans la norme ASTM D 2872. Les compositions bitume-polymère avant et après essai de vieillissement sont désignées respectivement par "Produit Ia1" et "Produit Ia2".

Le tableau I donne également les caractéristiques correspondantes du bitume de départ avant et après l'essai de vieillissement (respectivement "Produit Ib1" et "Produit Ib2").

En se reportant aux valeurs inscrites au tableau I, on peut voir que l'utilisation d'un agent de couplage constitué de soufre cristallisé conduit à une composition bitume-polymère, dont les caractéristiques élastomériques la différencient nettement du bitume (comparer les résultats de l'essai de traction). Par ailleurs, la stabilité au vieillissement de la composition bitume-polymère est améliorée par rapport à celle observée pour le bitume pur.

TABLEAU I

| Caractéristiques Produit | PENETRATION à 25°C (1/10 mm) | POINT DE ramollissement B & A (°C) | POINT DE Fraas (°C) | ESSAI DE TRACTION TEMP. (°C) | VIT. mm/mn | σs bars | σr bars | εs % | εr % |
|---|---|---|---|---|---|---|---|---|---|
| I a 1 | 67 | 57 | - 19,5 | 20 | 500 | 2,3 | 0,5 | 23 | >900 |
| | | | | 5 | 500 | 20 | 5,6 | 15 | 330 |
| I a 2 | 49 | 59 | - 17 | 20 | 500 | 4,4 | 1,8 | 20 | >900 |
| | | | | 5 | 500 | 2,5 | 9,1 | 13 | 180 |
| I b 1 | 82 | 48 | - 18,5 | 20 | 500 | 1,2 | 0 | 15 | >900 |
| | | | | 5 | 500 | FRAGILE | | | |
| I b 2 | 51 | 50 | - 15 | 5 | 500 | 1,8 | 0 | 15 | >900 |
| | | | | 5 | 500 | FRAGILE | | | |

EXEMPLE 2 :

Préparation d'une composition bitume-polymère selon l'invention par incorporation directe du copolymère et de l'agent de couplage au bitume.

On opérait comme décrit dans l'exemple 1 en utilisant toutefois à titre d'agent de couplage un mélange de 0,8 partie en poids de soufre cristallisé et de 0,2 partie en poids d'un accélérateur de vulcanisation donneur de soufre consistant en disulfure de tétraméthylthiurame.

Dans le tableau II on donne, pour les compositions bitume-polymère obtenues dans les exemples 1 et 2, des caractéristiques analogues à celles figurant dans le Tableau I. Les mêmes notations symbolisent les caractéristiques correspondant aux compositions bitume-polymère avant et après l'essai de vieillissement.

Comme il ressort des résultats présentés au tableau II, l'utilisation d'un accélérateur de vulcanisation donneur de soufre mélangé au soufre cristallisé pour constituer l'agent de couplage conduit à l'obtention d'une composition bitume-polymère présentant des caractéristiques élastomériques substantiellement améliorées, notamment à basse température, par rapport à celles observées pour la composition bitume-polymère témoin préparée en faisant appel à un agent de couplage consistant seulement en soufre cristallisé. Par ailleurs, la stabilité au vieillissement de la composition bitume-polymère selon l'invention est nettement améliorée par rapport à celle de la composition bitume-polymère témoin.

TABLEAU II

| Caractéristiques / Produit | PENETRATION à 25°C (1/10 mm) | POINT DE ramollissement B & A (°C) | POINT DE Fraas (°C) | ESSAI DE TRACTION TEMP. (°C) | VIT. mm/mn | σs bars | σr bars | εs % | εr % |
|---|---|---|---|---|---|---|---|---|---|
| I a 1 | 67 | 57 | - 19,5 | 20 | 500 | 2,3 | 0,5 | 23 | >900 |
| | | | | 5 | 500 | 20 | 5,6 | 15 | 330 |
| I a 2 | 49 | 59 | - 17 | 20 | 500 | 4,4 | 1,8 | 20 | >900 |
| | | | | 5 | 500 | 25 | 9,1 | 13 | 180 |
| II a 1 | 64 | 56 | - 23 | 20 | 500 | 3,1 | 1,3 | 25 | >900 |
| | | | | 5 | 500 | 23 | 9,5 | 22 | >900 |
| II a 2 | 44 | 63 | - 18 | 20 | 500 | 3,3 | 1,3 | 20 | >900 |
| | | | | 5 | 500 | 22 | 9,8 | 18 | 550 |

EXEMPLES 3-4

Préparations de compositions bitume-polymère selon l'invention par incorporation directe du copolymère et de l'agent de couplage au bitume.

On opérait comme décrit dans l'exemple 2 avec toutefois certaines variations qui sont définies ci-après, les autres conditions opératoires étant celles de l'exemple 2.

Dans l'exemple 3, l'agent de couplage était constitué d'un mélange de 0,2 partie en poids de disulfure de tétraméthylthiurame et de 0,7 partie en poids de soufre cristallisé et la température était égale à 160 °C.

Dans l'exemple 4, l'agent de couplage était constitué d'un mélange de 0,15 partie en poids d'un accélérateur de vulcanisation donneur de soufre consistant en disulfure de morpholine et de 0,75 partie en poids de soufre cristallisé, la réaction étant conduite à 140 °C.

On donne dans le tableau III les caractéristiques des compositions bitume-polymère ainsi obtenues, avant et après les avoir soumises à l'essai de vieillissement.

Les compositions bitume-polymère avant vieillissement sont désignées par "Produit P.a.1", tandis que les compositions bitume-polymère correspondantes après vieillissement sont désignées par "Produit P.a.2", P représentant le numéro de l'exemple en chiffre romain.

TABLEAU III

| Caractéristiques / Produit | PENETRATION à 25°C (1/10 mm) | POINT DE ramollissement B & A (°C) | POINT DE Fraass (°C) | ESSAI DE TRACTION TEMP. (°C) | VIT. mm/mn | $\sigma_s$ bars | $\sigma_r$ bars | $\varepsilon_s$ % | $\varepsilon_r$ % |
|---|---|---|---|---|---|---|---|---|---|
| III a 1 | 67 | 58 | - 26 | 20 | 500 | 2,1 | 0,7 | 23 | >900 |
| | | | | 5 | 500 | 18 | 6,8 | 22 | >900 |
| III a 2 | 40 | 65 | - 19 | 20 | 500 | 4,0 | 2,0 | 29 | >900 |
| | | | | 5 | 500 | 21 | 9,1 | 27 | 340 |
| IV.a.1 | 64 | 53 | - 20 | 20 | 500 | 2,5 | 0,7 | 25 | >900 |
| | | | | 5 | 500 | 21 | 6,2 | 20 | >900 |
| IV.a.2 | 43 | 65 | - 18 | 20 | 500 | 4,4 | 1,9 | 29 | >900 |
| | | | | 5 | 500 | 24 | 9,3 | 22 | 220 |

EXEMPLE 5

Préparation d'une composition bitume-polymère témoin par la technique de la solution mère.

a - Préparation de la solution mère :

On opérait dans un réacteur en acier inoxydable muni d'un agitateur et d'une double enveloppe susceptible d'être parcourue par un fluide caloporteur.

L'huile hydrocarbonée utilisée comme solvant pour former la solution mère était une coupe pétrolière de caractère naphténo/aromatique présentant les caractéristiques suivantes :

. point initial de distillation ASTM égal à 176 °C
. point final de distillation ASTM égal à 352 °C (mesurés suivant la norme ASTM D 86-67)
. point éclair (norme Luchaire NF T 60103) de 79 °C
. masse volumique (norme ASTM D 1657-64) égale à 0,956

On introduisait dans le réacteur 233 parties en poids de la coupe pétrolière et chauffait cette coupe pétrolière, tout en l'agitant, jusqu'à une température d'environ 100 °C par circulation d'un fluide chaud dans la double enveloppe du réacteur.

En maintenant cette température et l'agitation, on introduisait alors dans le réacteur 2 parties en poids de soufre cristallisé et 54 parties en poids d'une poudre, antimottée par 2 % en poids de silice, d'un copolymère diséquencé de styrène et de butadiène renfermant en poids 25 % de styrène et possèdant une masse moléculaire moyenne viscosimétrique d'environ 75.000.

Après une heure d'agitation à la température d'environ 100 °C, on obtenait une solution homogène et fluide à température ordinaire caractérisée par les valeurs suivantes de viscosité cinématique :

. viscosité cinématique mesurée à 50 °C : 12,10 x 10 $^{-4}$ $m^2/s$
. viscosité cinématique mesurée à 100 °C : 2,92 x 10 $^{-4}$ $m^2/s$

Cette solution constituait la solution mère utilisée pour la préparation de la composition bitume-polymère.

b - Préparation de la composition bitume-polymère

Dans une cuve équipée d'agitateurs et pourvue de réchaufeurs à vapeur, on pompait à 170 °C, 1.700 parties d'un bitume de distillation directe présentant les propriétés physiques initiales suivantes :

. point de ramollissement (essai B & A) : 48 °C
. point de Fraass : - 18,5 °C
. pénétration : 82 1/10 mm
. viscosité cinématique à 160 °C : 1,70 x $10^{-4}$ $m^2/s$

Au contenu de la cuve, maintenu à 170 °C sous agitation, on ajoutait ensuite 300 parties de la solution mère préparée comme décrit ci-dessus.

Après 30 minutes d'agitation à la température de 170 °C, on obtenait une composition fluide bitume-polymère présentant une viscosité dynamique à 160 °C égale à 0,098 Pa.s, c'est-à-dire une viscosité comparable à celle d'un bitume ayant une pénétration dans l'intervalle 180-220, et pouvant être chargée directement dans une répandeuse moyenne pression classique.

Dans le tableau IV on donne les propriétés de la composition bitume-polymère ainsi obtenue avant et après l'avoir soumise à un traitement thermique consistant à porter à 160 °C dans une étuve un récipient métallique hermétique contenant la compositon bitume-polymère et à maintenir ledit récipient à cette température pendant 60 jours, cet essai permettant de simuler l'évolution du produit pendant un stockage prolongé. La composition bitume-polymère est désignée par "Produit V.a.1" avant traitement thermique et par "Produit V.a.2" après traitement thermique.

Le tableau IV montre également, à titre de comparaison, avant et après le traitement thermique précité, les caractéristiques correspondantes du bitume de départ fluidifié par 12 % en poids, par rapport au bitume, du solvant utilisé pour constituer la solution mère ("Produit V.b.1" et "Produit V.b.2" respectivement), et d'une composition bitume-polymère préparée de manière similaire à celle décrite dans l'exemple 5 mais en omettant le soufre cristallisé ( "Produit v.c.1" et "Produit v.c.2").

Dans la désignation du produit, les 1 et 2 définissent les compositions bitume-polymère respectivement avant et après traitement thermique.

TABLEAU IV

| Caractéristiques / Produit | Viscosité (Rheomat) à160°C (Poise) | Pseudo Viscosité (s) | ESSAI DE TRACTION TEMP. (°C) | VIT. mm/mn | $\sigma_s$ bars | $\sigma_r$ bars | $\varepsilon_s$ % | $\varepsilon_r$ % |
|---|---|---|---|---|---|---|---|---|
| V a 1 | 1,01 | 100 | - 10 | 500 | 5,6 | 1,6 | 15 | >900 |
| V a 2 | 1,2 | 114 | - 10 | 500 | 4,1 | 2,6 | 20 | >900 |
| V b 1 | 0,7 | 60 | - 10 | 500 | FRAGILE | | | |
| V b 2 | 0,85 | 80 | - 10 | 500 | FRAGILE | | | |
| V C.1 | 0,81 | 84 | - 10 | 500 | 6,3 | 0 | 15 | 300 |
| V C.2 | 0,97 | 96 | - 10 | 500 | FRAGILE | | | |

Comme il ressort de la comparaison des résultats figurant au tableau IV, l'utilisation de soufre cristallisé comme agent de couplage dans la technique faisant appel à la solution mère conduit à l'obtention d'une composition bitume-polymère fluidifiée présentant des propriétés élastomériques. Après le stockage à température élevée, le produit donne un liant résiduel, dont les propriétés sont voisines de celle de la compositon bitume-polymère avant traitement thermique.

EXEMPLE 6

Préparation d'une composition bitume-polymère selon l'invention par la technique de la solution mère.

On opérait comme décrit dans l'exemple 5 en formant toutefois la solution mère à partir de 243,6 parties en poids de la coupe pétrolière, 54 parties en poids du copolymère diséquencé de styrène et de butadiène et d'un agent de couplage constitué de 0,4 partie en poids d'un accélérateur de vulcanisation donneur de soufre consistant en disulfure de tétraméthylthiurame et de 1,5 parties en poids de soufre cristallisé.

Dans le tableau V on donne pour la composition bitume-polymère obtenue des caractéristiques analogues a celles données dans le tableau IV pour la composition témoin de l'exemple 5, le tableau V incluant également les caractéristiques de la composition témoin pour faciliter la comparaison.

L'examen des résultats présentés dans le tableau V fait ressortir que l'utilisation d'un agent de couplage selon l'invention dans la technique de préparation de composition bitume-polymère faisant appel à la solution mère conduit à l'obtention d'une composition bitume-polymère présentant des caractéristiques élastomériques nettement améliorées, en particulier la contrainte à la rupture $\sigma r$, par rapport à celles de la composition bitume-polymère témoin pour la préparation de laquelle (exemple 5) on utilise seulement du soufre cristallisé comme agent de couplage.

TABLEAU V

| Caractéristiques / Produit | Viscosité (Rheomat) à160°C (Poise) | Pseudo Viscosité (s) | ESSAI DE TRACTION TEMP. (°C) | VIT. mm/mn | $\sigma s$ bars | $\sigma r$ bars | $\varepsilon s$ % | $\varepsilon r$ % |
|---|---|---|---|---|---|---|---|---|
| V a 1 | 1,01 | 100 | − 10 | 500 | 4,6 | 1,6 | 15 | >900 |
| V a 2 | 1,20 | 114 | − 10 | 500 | 4,1 | 2,6 | 20 | >900 |
| VI a 1 | 1,21 | 116 | − 10 | 500 | 4,6 | 2,5 | 17 | >900 |
| VI a 2 | 1,30 | 125 | − 10 | 500 | 5,2 | 3,4 | 22 | >900 |

Par ailleurs, la stabilité au stockage à haute température, par exemple à 160 °C pendant deux mois, de la composition bitume-polymère selon l'invention (exemple 6) est très améliorée par rapport à celle de la composition témoin (exemple 5), les propriétés élastomériques de la composition selon l'invention ainsi stockée (Produit VI.a.2) étant tout aussi bonnes que celles de la composition fraîchement préparée (Produit VI.a.1).

**Description pour les Etats contractants suivants : GR, ES**

L'invention concerne un procédé de préparation de compositions bitume-polymère. Elle se rapporte encore à l'application des compositions obtenues à la réalisation de revêtements et en particulier de revêtements superficiels routiers, d'enrobés ou encore de revêtements d'étanchéité, et a trait également à une solution mère de polymère utilisable pour l'obtention desdites compositions.

Il est connu d'utiliser des compositions bitumineuses comme revêtements de surfaces diverses et en particulier comme enduits superficiels routiers à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :

. point de ramollissement, exprimé en °C et déterminé par l'essai Bille et Anneau défini par la norme NFT 66 008,
. point de fragilité ou point de Fraass, exprimé en °C et déterminé selon la norme IP 80/53,
. pénétration, exprimée en 1/10 de mm et déterminée selon la norme NFT 66 004,
. caractéristiques rhéologiques en traction déterminées selon la norme NFT 46 002 et comportant les grandeurs :

  Contrainte au seuil $\sigma s$ en bars
  allongement au seuil $\epsilon s$ en %
  contrainte à la rupture $\sigma r$ en bars
  allongement à la rupture $\epsilon r$ en %

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume-polymère ayant des qualités mécaniques améliorées par rapport à celles des bitumes seuls.

Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylate, polychloroprène, terpolymère éthylène/propylène/diène (EPDM), polynorbornène, ou encore copolymères statistiques ou séquencés de styrène et d'un diène conjugué.

Parmi les polymères ajoutés aux bitumes, les copolymères statistiques ou séquencés de styrène et d'un diène conjugué et notamment de styrène et de butadiène ou de styrène et d'isoprène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume-polymère peut être améliorée par couplage chimique du polymère au bitume, cette amélioration permettant en outre d'élargir le domaine d'utilisation des compositions bitume-polymère.

Des compositions bitume-polymère pour lesquelles un copolymère statistique ou séquencé de styrène ou d'un diène conjugué tel que butadiène ou isoprène est couplé au bitume peuvent être préparées en faisant appel aux procédés décrits dans les citations FR-A-2376188; FR-A-2429241 et FR-A-2528439. Dans ces procédés, on incorpore ledit copolymère et une source de soufre au bitume, en opérant entre 130°C et 230°C et sous agitation, puis l'on maintient le mélange ainsi formé sous agitation et à une température entre 130°C et 230°C pendant au moins quinze minutes. La source de soufre consiste en soufre chimiquement non lié (FR-A-2376188 et FR-A-2429241) ou en un polysulfure (FR-A-2528439) et l'incorporation du copolymère et de la source de soufre au bitume est réalisée soit par addition directe desdits ingrédients au bitume (FR-A-2376188 et FR-A-2528439) ou bien en préparant tout d'abord une solution mère du copolymère et de la source de soufre dans une huile hydrocarbonée, puis en ajoutant ladite solution mère au bitume (FR-A-2429241 et FR-A-2528439).

Comme il ressort de la citation FR-A-2,429,241 (page 4, lignes 10-12) ou de la citation correspondante GB-A-2,025,986 (page 2, lignes 30-31), l'action du soufre peut être renforcée en présence d'accélérateurs de vulcanisation tels que mercapto-2 benzothiazole ou o-tolylguanidine ou de composés activateurs tels que le stéarate de zinc, c'est-à-dire de produits non donneurs de soufre.

On a maintenant trouvé que l'on pouvait encore améliorer substantiellement les caractéristiques mécaniques et la stabilité des compositions bitume-polymère pour lesquelles un copolymère séquencé de styrène ou d'un diène conjugué, notamment butadiène et isoprène, est couplé au bitume sous l'action d'un agent de couplage jouant le rôle de donneur de soufre, si ledit agent de couplage renfermait au moins un accélérateur de vulcanisation jouant directement le rôle de donneur de soufre. En particulier, les caractéristiques mécaniques statiques, déterminées notamment par essai de traction, sont améliorées à basse température et sont conservées dans une large mesure après vieillissement simulé. Cette conservation des

caractéristiques constitue un gage de constance de la qualité des compositions bitume-polymère, qui sont le plus souvent préparées par campagne et donc stockées à haute température pendant une durée plus ou moins longue avant utilisation.

La demande de brevet Européen n°88401558 du 21.06.1988 (publication n°0299820 du 18.01.1989) concerne une composition de vulcanisation utilisable pour la vulcanisation d'un élastomère, notamment un copolymère triséquencé styrène/butadiène/styrène, mélangé à un bitume. Cette composition comprend, en poids, 0,5 à 3 parties de mercaptobenzothiazole, 0,5 à 3 parties de disulfure de tétraméthylthiurame, 3 à 5 parties de ZnO, 1 à 3 parties d'acide stéarique, 1 à 4 parties d'antioxydant et 1 à 5 parties d'un agent de vulcanisation composé de 0 à 100% de soufre sublimé, 0 à 75% d'un donneur de soufre choisi parmi les thiurames et les dithiomorpholines et 0 à 50% d'un sulfénamide, le rapport pondéral du sulfénamide au donneur de soufre allant de 1:3 à 1:1.

La demande internationale de brevet PCT/BE89/00026 du 09.06.1989 (publication n°W089/12079 du 14.12.1989) et la demande de brevet Européen n°89907645 qui en découle (publication n°0424420) concernent un procédé de production de compositions bitume-caoutchouc, dans lequel on met en contact, à une température comprise entre 140 °C et 200 °C, un bitume de pénétration comprise entre 20 et 320, un polymère caoutchouteux, par exemple un polymère bloc de styrène et de butadiène ou d'isoprène, un agent de couplage formé d'un dérivé sulfuré du type disulfure ou dithiocarbamate et de soufre élémentaire, dans un rapport pondéral dérivé sulfuré: soufre élémentaire compris entre 40:60 et 80:20, et éventuellement un composé alcalin soluble dans le bitume.

L'invention a pour objet un procédé de préparation de compositions bitume-polymère, dans lequel on réalise, à une température comprise entre 100 °C et 230 °C, un mélange de bitume avec un copolymère séquencé de styrène et d'un diène conjugué, utilisé en quantité allant de 0,5 à 15% en poids du bitume, et un agent de couplage renfermant un composé donneur de soufre et l'on maintient le mélange obtenu, dans ledit intervalle de température et sous agitation, pendant une durée d'au moins dix minutes, caractérisé en ce que l'agent de couplage est choisi parmi les produits M, qui sont constitués, en poids, de 1% à 100% d'une composante A consistant en un ou plusieurs accélérateurs de vulcanisation donneurs de soufre et en 99% à 0% d'une composante B consistant en un ou plusieurs agents de vulcanisation choisis parmi le soufre élémentaire et les polysulfures d'hydrocarbyle, et en ce que ledit agent de couplage est utilisé en proportion propre à fournir une quantité de soufre représentant, en poids, 0,5% à 10% et plus particulièrement 1% à 8% du copolymère utilisé pour produire la composition bitume-polymère.

En particulier les produits M, parmi lesquels peut être choisi l'agent de couplage consistent, en poids, en 10% à 100% de la composante A et 90 à 0% de la composante B.

Les accélérateurs de vulcanisation donneurs de soufre utilisable pour former la composante A du produit M peuvent être choisis, en particulier, parmi les polysulfures de thiurame de formule générale

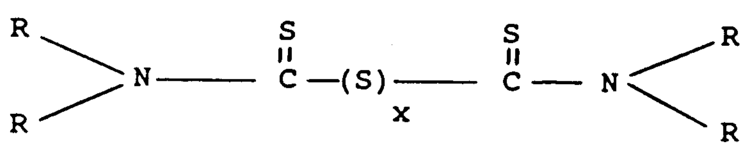

dans laquelle les R, identiques ou différents, représentent chacun un radical hydrocarboné en $C_1$ à $C_{12}$ et de préférence en $C_1$ à $C_8$, notamment un radical alcoyle, cycloalcoyle ou aryle, ou bien deux radicaux R fixés à un même atome d'azote sont reliés entre eux pour former un radical divalent hydrocarboné en $C_2$ à $C_8$ et x est un nombre allant de 2 à 8. Comme exemples de tels accélérateurs de vulcanisation on peut citer notamment les composés disulfure de dipentaméthylènethiurame, tétrasulfure de dipentaméthylènethiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre utilisables pour former la composante A du produit M, on peut encore citer les disulfures d'alcoylphénols, le disulfure de morpholine et le N, N'-disulfure de caprolactame.

Parmi les divers mélanges susceptibles de constituer des agents de couplage selon l'invention, on préfère ceux qui conduisent à une vulcanisation rapide et qui limitent le risque de prévulcanisation.

Comme indiqué précédemment, la composante B de l'agent de couplage consiste en un ou plusieurs agents de vulcanisation choisi parmi le soufre élémentaire et les polysulfures d'hydrocarbyle.

Avantageusement le soufre utilisé est du soufre en fleur et de préférence du soufre cristallisé orthorhombique connu sous le nom de soufre alpha. En particulier, la coposante B du produit M consiste en

soufre cristallisé orthorhombique.

Les polysulfures d'hydrocarbyle susceptibles d'être utilisés comme agent de vulcanisation dans la composante B du produit M ou dans le produit D répondent à la formule générale

$R_1$ - $(S)_m$ - $(R_3$ - $(S)_m$ $)_r$ - $R_2$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé ou insaturé, formant un cycle avec les autres groupements d'atomes associés dans la formule, $R_3$ est un radical hydrocarboné divalent, saturé ou insaturé, en $C_1$ à $C_{20}$, les - $(S)_m$ - représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2, et r représente un nombre entier prenant les valeurs de zéro à 10.

Dans la formule précitée, les radicaux hydrocarbonés monovalents $R_1$ et $R_2$ en $C_1$ à $C_{20}$ ainsi que le radical hydrocarboné divalent $R_3$ en $C_1$ à $C_{20}$ sont choisis notamment parmi les radicaux aliphatiques, alicycliques ou aromatiques. Lorsque les radicaux $R_1$ et $R_2$ sont reliés entre eux pour constituer un radical hydrocarboné divalent en $C_1$ à $C_{20}$ formant un cycle avec les autres groupements d'atomes associés dans la formule, ledit radical divalent est similaire au radical R et peut être également du type aliphatique, alicyclique, ou aromatique. En particulier les radicaux $R_1$ et $R_2$ sont identiques et choisis parmi les radicaux alcoyles en $C_1$ à $C_{20}$, par exemple éthyle, propyle, hexyle, octyle, nonyle, décyle, dodécyle linéaire, tertio-dodécyle, hexadécyle, octadécyle et les radicaux cycloalcoyles et aryles en $C_6$ à $C_{20}$, notamment benzyle, phényle, tolyle, cyclohexyle, tandis que le radical $R_3$ ou le radical divalent formé par la réunion de $R_1$ et $R_2$ sont choisis parmi les radicaux alcoylènes en $C_1$ à $C_{20}$ ou les radicaux cycloalcoylènes ou arylènes, notamment phénylène, tolylène, cyclohexylène, en $C_6$ à $C_{20}$.

Des polysulfures utilisables suivant l'invention sont en particulier ceux définis par la formule

$R_1$ - $(S)_n$ - $R_2$

dans laquelle $R_1$ et $R_2$ désignent chacun un radical hydrocarboné monovalent, saturé ou insaturé, en $C_1$ à $C_{20}$ ou sont reliés entre eux pour former un radical divalent $R_3$ en $C_1$ à $C_{20}$, $R_1$, $R_2$ et $R_3$ ayant les significations précédentes, - $(S)_n$ - représente un groupement divalent formé par un enchaînement de n atomes de soufre, n étant un nombre entier allant de 2 à 6.

Des polysulfures préférés répondent à la formule générale

$R_4$ - $(S)_p$ - $R_4$, dans laquelle $R_4$ désigne un radical alcoyle en $C_6$ à $C_{16}$, et - $(S)_p$ - représente un groupement divalent formé par un enchaînement de p atomes de soufre, p étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécyle, pentasulfure de dihexyle, pentasulfure de dioctyle, pentasulfure de dinonyle, pentasulfure de ditertiododécyle, pentasulfure de dihexadécyle.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Le bitume, qui constitue la partie majoritaire des compositions bitume-polymère suivant l'invention, est choisi parmi les divers bitumes ayant une pénétration, définie suivant la norme NFT 66004, comprise entre 5 et 500 et de préférence entre 20 et 400. De tels bitumes peuvent être, en particulier, des bitumes de distillation directe ou de distillation sous pression réduite, ou encore des bitumes soufflés ou semi-soufflés, ayant une pénétration comprise dans les intervalles précités.

Le copolymère de styrène et d'un diène conjugué, utilisé dans la préparation de la composition bitume-polymère, est choisi avantageusement parmi les copolymères séquencés de styrène et de butadiène, de styrène et d'isoprène, de styrène et de chloroprène, de styrène et de butadiène carboxylé, et de styrène et d'isoprène carboxylé. Le copolymère de styrène et de diène conjugué, et en particulier chacun des copolymères précités, a une teneur pondérale en styrène allant de préférence de 15 % à 40 %. La masse moléculaire viscosimétrique moyenne du copolymère de styrène et de diène conjugué, et en particulier celle des copolymères mentionnés ci-dessus, peut être comprise avantageusement entre 30.000 et 300.000 et se situe de préférence entre 70.000 et 200.000.

Le copolymère de styrène et de diène conjugué est choisi de préférence parmi les copolymères di-ou triséquencés de styrène et de butadiène, de styrène et d'isoprène, de styrène et de butadiène carboxylé, de styrène et d'isoprène carboxylé ayant des teneurs en styrène et des masses moléculaires situées dans les intervalles définis précédemment.

La quantité préférée de copolymère ajoutée au bitume est comprise entre 0,7 et 10 % en poids du bitume.

Dans une forme préférée de mise en oeuvre du procédé suivant l'invention, le copolymère et l'agent de couplage sont incorporés au bitume sous la forme d'une solution mère de ces deux produits dans un solvant consistant en une huile hydrocarbonée, qui présente un intervalle de distillation à pression atmosphérique, déterminé selon la norme ASTM D 86-67, compris entre 100 °C et 450 °C et situé plus particulièrement entre 150 °C et 370 °C.

Cette huile hydrocarbonée, qui peut être notamment une coupe pétrolière de caractère aromatique, une coupe pétrolière de caractère naphténo-paraffinique, une coupe pétrolière de caractère paraffinique, une coupe pétrolière de caractère naphténo-aromatique, une huile de houille ou encore une huile d'origine végétale, est suffisamment "lourde" pour limiter l'évaporation au moment de l'addition de la solution mère au bitume et en même temps suffisamment "légère" pour être éliminée au maximum après répandage de la composition bitume-polymère la contenant de manière à retrouver les mêmes propriétés mécaniques qu'aurait présentées, après répandage à chaud, la composition bitume-polymère préparée sans faire appel à la technique de la solution mère.

La solution mère est préparée par mise en contact des ingrédients la composant, à savoir huile hydrocarbonée servant de solvant, copolymère, et agent de couplage, sous agitation, à des températures comprises entre 20 et 170 °C et plus particulièrement entre 40 et 120 °C, pendant un temps suffisant, par exemple d'environ 30 minutes à environ 90 minutes, pour obtenir une dissolution complète du copolymère et de l'agent de couplage dans l'huile hydrocarbonée.

Les concentrations respectives du copolymère et de l'agent de couplage dans la solution mère peuvent varier assez largement en fonction notamment de la nature de l'huile hydrocarbonée utilisée pour dissoudre le copolymère et l'agent de couplage. Ainsi les quantités respectives de copolymère et d'agent de couplage peuvent représenter avantageusement 5 % à 40 % et 0,02 à 15 % du poids de l'huile hydrocarbonée. Une solution mère préférée renferme, comptés en poids de l'huile hydrocarbonée employée comme solvant, 10 à 35 % de copolymère et 0,1 à 5 % d'agent de couplage.

Lorsque les compositions suivant l'invention sont formées directement à partir des ingrédients bitume, copolymère, et agent de couplage, on opère de préférence en mettant tout d'abord en contact le copolymère avec le bitume, dans les proportions choisies, à une température comprise entre 100 °C et 230 °C et sous agitation, pendant une durée suffisante, généralement de l'ordre de quelques dizaines de minutes à quelques heures, pour former un mélange homogène, puis on ajoute l'agent de couplage au mélange obtenu et maintient le tout sous agitation à une température comprise entre 100 °C et 230 °C, par exemple correspondant à la température de mise en contact du copolymère avec le bitume, pendant une durée au moins égale à 10 minutes, et généralement allant de 10 à 90 minutes, pour permettre à l'agent de couplage de libérer du soufre radicalaire et au soufre radicalaire ainsi produit d'initier d'une part le greffage du copolymère au bitume et d'autre part le pontage des chaînes dudit copolymère entre elles.

Les quantités de copolymère mise en contact avec le bitume et d'agent de couplage ajoutée ensuite au mélange homogène de bitume et dudit copolymère sont choisies pour être comprises dans les intervalles définis précédemment pour ces quantités.

Pour préparer les compositions bitume-polymère suivant l'invention en faisant appel à la technique de la solution mère, on mélange la solution mère du copolymère et de l'agent de couplage avec le bitume, en opérant à une température comprise entre 100 °C et 230 °C et sous agitation, ceci étant effectué par exemple en ajoutant la solution mère au bitume maintenu sous agitation à la température entre 100 °C et 230 °C, puis on maintient le mélange résultant sous agitation à une température comprise entre 100 °C et 230 °C, par exemple à la température utilisée pour le mélange de la solution mère au bitume, pendant une durée au moins égale à minutes et généralement allant de 10 à 90 minutes, pour permettre, par le biais de l'agent de couplage, le greffage du copolymère aux asphaltènes du bitume et le pontage des chaînes dudit copolymère entre elles.

La quantité de solution mère mélangée au bitume est choisie pour fournir les quantités désirées, par rapport au bitume, de copolymère et d'agent de couplage lesdites quantités étant dans les fourchettes définies précédemment.

Une forme de mise en oeuvre particulièrement préférée pour la préparation de compositions bitume-polymère suivant l'invention par la technique de la solution mère consiste à mettre en contact, à une température comprise entre 100 °C et 230 °C et sous agitation, de 80 à 95 % en poids du bitume avec 20

à 5 % en poids de la solution mère, cette dernière renfermant, en poids de l'huile hydrocarbonée servant de solvant, 10 à 35 % de copolymère de styrène et de diène conjugué et 0,1 à 5 % d'agent de couplage, puis à maintenir le mélange ainsi obtenu sous agitation à une température comprise entre 100 °C et 230 °C, et de préférence à la température utilisée pour la mise en contact du bitume avec la solution mère, pendant une durée au moins égale à 10 minutes, et de préférence comprise entre 10 et 60 minutes.

Les compositions de bitume-polymère obtenues par le procédé suivant l'invention sont utilisables pour la réalisation de revêtements divers, et en particulier de revêtements superficiels routiers. Pour cette application notamment, les compositions bitume-polymère de l'invention préparées par la technique de la solution mère sont tout particulièrement adaptées, car elles sont directement utilisables par les moyens classiques de répandage.

L'invention est illustrée par les exemples suivants donnés à titre non limitatif.

Les caractéristiques rhéologiques et mécaniques des bitumes ou des compositions bitume-polymère auxquelles on fait référence dans ces exemples sont celles définies précédemment, à savoir, pénétration, point de ramollissement, point de Fraas et caractéristiques rhéologiques par traction.

EXEMPLE 1 :

Préparation d'une composition bitume-polymère témoin par incorporation directe du copolymère et de l'agent de couplage au bitume.

En opérant à 170 °C sous agitation, on mélangeait 1.000 parties en poids d'un bitume de distillation directe ayant une pénétration de 82, un point de ramollissement Bille et Anneau de 48 °C, un point de Fraas égal à - 18,5 °C et une viscosité cinématique à 160 °C de $1{,}7\times10^{-4}\,m^2/s$ avec 31 parties en poids d'un copolymère diséquencé de styrène et de butadiène présentant une masse moléculaire moyenne viscosimétrique égale à environ 75.000 et renfermant 25 % en poids de styrène.

Après 3 heures 10 minutes de mélange sous agitation, on obtenait une masse homogène.

A cette masse maintenue à 170 °C, on ajoutait alors 1 partie en poids de soufre cristallisé et on agitait encore l'ensemble pendant 60 minutes pour former la composition bitume-polymère.

Dans le tableau I on donne les principales caractéristiques de la composition bitume-polymère ainsi obtenue avant et après l'avoir soumise à l'essai de vieillissement dit "Rolling Film Oven Test" défini dans la norme ASTM D 2872. Les compositions bitume-polymère avant et après essai de vieillissement sont désignées respectivement par "Produit Ia1" et "Produit Ia2".

Le tableau I donne également les caractéristiques correspondantes du bitume de départ avant et après l'essai de vieillissement (respectivement "Produit Ib1" et "Produit Ib2").

En se reportant aux valeurs inscrites au tableau I, on peut voir que l'utilisation d'un agent de couplage constitué de soufre cristallisé conduit à une composition bitume-polymère, dont les caractéristiques élastomériques la différencient nettement du bitume (comparer les résultats de l'essai de traction). Par ailleurs, la stabilité au vieillissement de la composition bitume-polymère est améliorée par rapport à celle observée pour le bitume pur.

TABLEAU I

| Caractéristiques / Produit | PENETRATION à 25°C (1/10 mm) | POINT DE ramollissement B & A (°C) | POINT DE Fraas (°C) | ESSAI DE TRACTION: TEMP. (°C) | VIT. mm/mn | σs bars | σr bars | εs % | εr % |
|---|---|---|---|---|---|---|---|---|---|
| I a 1 | 67 | 57 | - 19,5 | 20 | 500 | 2,3 | 0,5 | 23 | >900 |
| | | | | 5 | 500 | 20 | 5,6 | 15 | 330 |
| I a 2 | 49 | 59 | - 17 | 20 | 500 | 4,4 | 1,8 | 20 | >900 |
| | | | | 5 | 500 | 2,5 | 9,1 | 13 | 180 |
| I b 1 | 82 | 48 | - 18,5 | 20 | 500 | 1,2 | 0 | 15 | >900 |
| | | | | 5 | 500 | FRAGILE | | | |
| I b 2 | 51 | 50 | - 15 | 5 | 500 | 1,8 | 0 | 15 | >900 |
| | | | | 5 | 500 | FRAGILE | | | |

EXEMPLE 2 :

Préparation d'une composition bitume-polymère selon l'invention par incorporation directe du copolymère et de l'agent de couplage au bitume.

On opérait comme décrit dans l'exemple 1 en utilisant toutefois à titre d'agent de couplage un mélange de 0,8 partie en poids de soufre cristallisé et de 0,2 partie en poids d'un accélérateur de vulcanisation donneur de soufre consistant en disulfure de tétraméthylthiurame.

Dans le tableau II on donne, pour les compositions bitume-polymère obtenues dans les exemples 1 et 2, des caractéristiques analogues à celles figurant dans le Tableau I. Les mêmes notations symbolisent les caractéristiques correspondant aux compositions bitume-polymère avant et après l'essai de vieillissement.

Comme il ressort des résultats présentés au tableau II, l'utilisation d'un accélérateur de vulcanisation donneur de soufre mélangé au soufre cristallisé pour constituer l'agent de couplage conduit à l'obtention d'une composition bitume-polymère présentant des caractéristiques élastomériques substantiellement améliorées, notamment à basse température, par rapport à celles observées pour la composition bitume-polymère témoin préparée en faisant appel à un agent de couplage consistant seulement en soufre cristallisé. Par ailleurs, la stabilité au vieillissement de la composition bitume-polymère selon l'invention est nettement améliorée par rapport à celle de la composition bitume-polymère témoin.

TABLEAU II

| Caractéristiques / Produit | PENETRATION à 25°C (1/10 mm) | POINT DE ramollissement B & A (°C) | POINT DE Fraas (°C) | ESSAI DE TRACTION | | | | | |
|---|---|---|---|---|---|---|---|---|---|
| | | | | TEMP. (°C) | VIT. mm/mn | $\sigma_s$ bars | $\sigma_r$ bars | $\varepsilon_s$ % | $\varepsilon_r$ % |
| I a 1 | 67 | 57 | − 19,5 | 20 | 500 | 2,3 | 0,5 | 23 | >900 |
| | | | | 5 | 500 | 20 | 5,6 | 15 | 330 |
| I a 2 | 49 | 59 | − 17 | 20 | 500 | 4,4 | 1,8 | 20 | >900 |
| | | | | 5 | 500 | 25 | 9,1 | 13 | 180 |
| II a 1 | 64 | 56 | − 23 | 20 | 500 | 3,1 | 1,3 | 25 | >900 |
| | | | | 5 | 500 | 23 | 9,5 | 22 | >900 |
| II a 2 | 44 | 63 | − 18 | 20 | 500 | 3,3 | 1,3 | 20 | >900 |
| | | | | 5 | 500 | 22 | 9,8 | 18 | 550 |

EXEMPLES 3-4

Préparations de compositions bitume-polymère selon l'invention par incorporation directe du copolymère et de l'agent de couplage au bitume.

On opérait comme décrit dans l'exemple 2 avec toutefois certaines variations qui sont définies ci-après, les autres conditions opératoires étant celles de l'exemple 2.

Dans l'exemple 3, l'agent de couplage était constitué d'un mélange de 0,2 partie en poids de disulfure de tétraméthylthiurame et de 0,7 partie en poids de soufre cristallisé et la température était égale à 160 °C.

Dans l'exemple 4, l'agent de couplage était constitué d'un mélange de 0,15 partie en poids d'un accélérateur de vulcanisation donneur de soufre consistant en disulfure de morpholine et de 0,75 partie en poids de soufre cristallisé, la réaction étant conduite à 140 °C.

On donne dans le tableau III les caractéristiques des compositions bitume-polymère ainsi obtenues, avant et après les avoir soumises à l'essai de vieillissement.

Les compositions bitume-polymère avant vieillissement sont désignées par "Produit P.a.1", tandis que les compositions bitume-polymère correspondantes après vieillissement sont désignées par "Produit P.a.2", P représentant le numéro de l'exemple en chiffre romain.

TABLEAU III

| Caractéristiques / Produit | PENETRATION à 25°C (1/10 mm) | POINT DE ramollissement B & A (°C) | POINT DE Fraas (°C) | ESSAI DE TRACTION | | | | | |
|---|---|---|---|---|---|---|---|---|---|
| | | | | TEMP. (°C) | VIT. mm/mn | $\sigma_s$ bars | $\sigma_r$ bars | $\varepsilon_s$ % | $\varepsilon_r$ % |
| III a 1 | 67 | 58 | - 26 | 20 | 500 | 2,1 | 0,7 | 23 | >900 |
| | | | | 5 | 500 | 18 | 6,8 | 22 | >900 |
| III a 2 | 40 | 65 | - 19 | 20 | 500 | 4,0 | 2,0 | 29 | >900 |
| | | | | 5 | 500 | 21 | 9,1 | 27 | 340 |
| IV.a.1 | 64 | 53 | - 20 | 20 | 500 | 2,5 | 0,7 | 25 | >900 |
| | | | | 5 | 500 | 21 | 6,2 | 20 | >900 |
| IV.a.2 | 43 | 65 | - 18 | 20 | 500 | 4,4 | 1,9 | 29 | >900 |
| | | | | 5 | 500 | 24 | 9,3 | 22 | 220 |

EXEMPLE 5

Préparation d'une composition bitume-polymère témoin par la technique de la solution mère.

a - Préparation de la solution mère :

On opérait dans un réacteur en acier inoxydable muni d'un agitateur et d'une double enveloppe susceptible d'être parcourue par un fluide caloporteur.

L'huile hydrocarbonée utilisée comme solvant pour former la solution mère était une coupe pétrolière de caractère naphténo/aromatique présentant les caractéristiques suivantes :

. point initial de distillation ASTM égal à 176 °C
. point final de distillation ASTM égal à 352 °C (mesurés suivant la norme ASTM D 86-67)
. point éclair (norme Luchaire NF T 60103) de 79 °C
. masse volumique (norme ASTM D 1657-64) égale à 0,956

On introduisait dans le réacteur 233 parties en poids de la coupe pétrolière et chauffait cette coupe pétrolière, tout en l'agitant, jusqu'à une température d'environ 100 °C par circulation d'un fluide chaud dans la double enveloppe du réacteur.

En maintenant cette température et l'agitation, on introduisait alors dans le réacteur 2 parties en poids de soufre cristallisé et 54 parties en poids d'une poudre, antimottée par 2 % en poids de silice, d'un copolymère diséquencé de styrène et de butadiène renfermant en poids 25 % de styrène et possèdant une masse moléculaire moyenne viscosimétrique d'environ 75.000.

Après une heure d'agitation à la température d'environ 100 °C, on obtenait une solution homogène et fluide à température ordinaire caractérisée par les valeurs suivantes de viscosité cinématique :

. viscosité cinématique mesurée à 50 °C : 12,10 x $10^{-4}$ $m^2/s$
. viscosité cinématique mesurée à 100 °C : 2,92 x $10^{-4}$ $m^2/s$

Cette solution constituait la solution mère utilisée pour la préparation de la composition bitume-polymère.

b - Préparation de la composition bitume-polymère

Dans une cuve équipée d'agitateurs et pourvue de réchaufeurs à vapeur, on pompait à 170 °C, 1.700 parties d'un bitume de distillation directe présentant les propriétés physiques initiales suivantes :

. point de ramollissement (essai B & A) : 48 °C
. point de Fraass : - 18,5 °C
. pénétration : 82 1/10 mm
. viscosité cinématique à 160 °C : 1,70 x $10^{-4}$ $m^2/s$

Au contenu de la cuve, maintenu à 170 °C sous agitation, on ajoutait ensuite 300 parties de la solution mère préparée comme décrit ci-dessus.

Après 30 minutes d'agitation à la température de 170 °C, on obtenait une composition fluide bitume-polymère présentant une viscosité dynamique à 160 °C égale à 0,098 Pa.s, c'est-à-dire une viscosité comparable à celle d'un bitume ayant une pénétration dans l'intervalle 180-220, et pouvant être chargée directement dans une répandeuse moyenne pression classique.

Dans le tableau IV on donne les propriétés de la composition bitume-polymère ainsi obtenue avant et après l'avoir soumise à un traitement thermique consistant à porter à 160 °C dans une étuve un récipient métallique hermétique contenant la compositon bitume-polymère et à maintenir ledit récipient à cette température pendant 60 jours, cet essai permettant de simuler l'évolution du produit pendant un stockage prolongé. La composition bitume-polymère est désignée par "Produit V.a.1" avant traitement thermique et par "Produit V.a.2" après traitement thermique.

Le tableau IV montre également, à titre de comparaison, avant et après le traitement thermique précité, les caractéristiques correspondantes du bitume de départ fluidifié par 12 % en poids, par rapport au bitume, du solvant utilisé pour constituer la solution mère ("Produit V.b.1" et "Produit V.b.2" respectivement), et d'une composition bitume-polymère préparée de manière similaire à celle décrite dans l'exemple 5 mais en omettant le soufre cristallisé ( "Produit V.c.1" et "Produit V.c.2").

Dans la désignation du produit, les 1 et 2 définissent les compositions bitume-polymère respectivement avant et après traitement thermique.

TABLEAU IV

| Caractéristiques / Produit | Viscosité (Rheomat) à160°C (Poise) | Pseudo Viscosité (s) | ESSAI DE TRACTION TEMP. (°C) | VIT. mm/mn | $\sigma s$ bars | $\sigma r$ bars | $\varepsilon s$ % | $\varepsilon r$ % |
|---|---|---|---|---|---|---|---|---|
| V' a 1 | 1,01 | 100 | - 10 | 500 | 5,6 | 1,6 | 15 | >900 |
| V' a 2 | 1,2 | 114 | - 10 | 500 | 4,1 | 2,6 | 20 | >900 |
| V' b 1 | 0,7 | 60 | - 10 | 500 | FRAGILE | | | |
| V' b 2 | 0,85 | 80 | - 10 | 500 | FRAGILE | | | |
| V' C.1 | 0,81 | 84 | - 10 | 500 | 6,3 | 0 | 15 | 300 |
| V' C.2 | 0,97 | 96 | - 10 | 500 | FRAGILE | | | |

Comme il ressort de la comparaison des résultats figurant au tableau IV, l'utilisation de soufre cristallisé comme agent de couplage dans la technique faisant appel à la solution mère conduit à l'obtention d'une composition bitume-polymère fluidifiée présentant des propriétés élastomériques. Après le stockage à température élevée, le produit donne un liant résiduel, dont les propriétés sont voisines de celle de la compositon bitume-polymère avant traitement thermique.

EXEMPLE 6

Préparation d'une composition bitume-polymère selon l'invention par la technique de la solution mère.

On opérait comme décrit dans l'exemple 5 en formant toutefois la solution mère à partir de 243,6 parties en poids de la coupe pétrolière, 54 parties en poids du copolymère diséquencé de styrène et de butadiène et d'un agent de couplage constitué de 0,4 partie en poids d'un accélérateur de vulcanisation donneur de soufre consistant en disulfure de tétraméthylthiurame et de 1,5 parties en poids de soufre cristallisé.

Dans le tableau V on donne pour la composition bitume-polymère obtenue des caractéristiques analogues à celles données dans le tableau IV pour la composition témoin de l'exemple 5, le tableau V incluant également les caractéristiques de la composition témoin pour faciliter la comparaison.

L'examen des résultats présentés dans le tableau V fait ressortir que l'utilisation d'un agent de couplage selon l'invention dans la technique de préparation de composition bitume-polymère faisant appel à la solution mère conduit à l'obtention d'une composition bitume-polymère présentant des caractéristiques élastomériques nettement améliorées, en particulier la contrainte à la rupture $\sigma r$, par rapport à celles de la composition bitume-polymère témoin pour la préparation de laquelle (exemple 5) on utilise seulement du soufre cristallisé comme agent de couplage.

TABLEAU V

| Caractéristiques / Produit | Viscosité (Rheomat) à160°C (Poise) | Pseudo Viscosité (s) | ESSAI DE TRACTION | | | | | |
|---|---|---|---|---|---|---|---|---|
| | | | TEMP. (°C) | VIT. mm/mn | $\sigma s$ bars | $\sigma r$ bars | $\varepsilon s$ % | $\varepsilon r$ % |
| V.a.1 | 1,01 | 100 | – 10 | 500 | 4,6 | 1,6 | 15 | >900 |
| V.a.2 | 1,20 | 114 | – 10 | 500 | 4,1 | 2,6 | 20 | >900 |
| VI.a.1 | 1,21 | 116 | – 10 | 500 | 4,6 | 2,5 | 17 | >900 |
| VI.a.2 | 1,30 | 125 | – 10 | 500 | 5,2 | 3,4 | 22 | >900 |

Par ailleurs, la stabilité au stockage à haute température, par exemple à 160 °C pendant deux mois, de la composition bitume-polymère selon l'invention (exemple 6) est très améliorée par rapport à celle de la composition témoin (exemple 5), les propriétés élastomériques de la composition selon l'invention ainsi stockée (Produit VI.a.2) étant tout aussi bonnes que celles de la composition fraîchement préparée (Produit VI.a.1).

**Revendications**

**Revendications pour les Etats contractants suivants : AT, BE, CH, DE, FR, GB, IT, LI, LU, NL, SE**

1. Procédé de préparation de compositions bitume-polymère, dans lequel on réalise, à une température comprise entre 100 °C et 230 °C, un mélange de bitume avec un copolymère séquencé de styrène et d'un diène conjugué, utilisé en quantité allant de 0,5 à 15% en poids du bitume, et un agent de couplage renfermant un composé donneur de soufre et l'on maintient le mélange obtenu, dans ledit intervalle de température et sous agitation, pendant une durée d'au moins dix minutes, caractérisé en ce que l'agent de couplage est choisi parmi les produits M, qui sont constitués, en poids, de 1% à 100% d'une composante A consistant en un ou plusieurs accélérateurs de vulcanisation donneurs de soufre et en 99% à 0% d'une composante B consistant en un ou plusieurs agents de vulcanisation choisis parmi le soufre élémentaire et les polysulfures d'hydrocarbyle, et en ce que ledit agent de couplage est utilisé en proportion propre à fournir une quantité de soufre représentant, en poids, 0,5 à 10% du copolymère utilisé pour produire la composition bitume-polymère, sous réserve qu'aucun composé alcalin soluble dans le bitume ne soit ajouté au milieu réactionnel lorsque l'agent de couplage consiste en un mélange d'un accélérateur de vulcanisation donneur de soufre du type disulfure et de soufre élémentaire dans un rapport pondéral accélérateur : soufre compris entre 40:60 et 80:20.

2. Procédé selon la revendication 1, caractérisé en ce que l'agent de couplage est utilisé en proportion propre à fournir une quantité de soufre représentant, en poids, 1 à 8% du copolymère utilisé pour produire la composition bitume-polymère.

3. Procédé selon la revendication 1 ou 2, caractérisé en ce que les produits M consistent, en poids, en 10% à 100% de la composante A et en 90% à 0% de la composante B.

4. Procédé selon l'une des revendications 1 à 3, caractérisé en ce que la composante A du produit M est constituée d'un ou plusieurs accélérateurs de vulcanisation donneurs de soufre choisis dans le groupe formé par a) les polysulfures de thiurame de formule

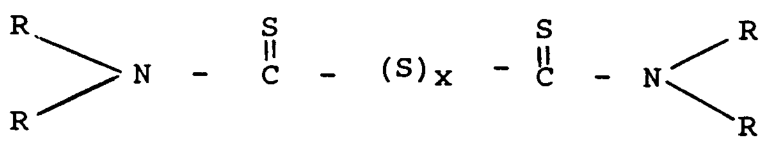

dans laquelle les R, identiques ou différents, représentent chacun un radical hydrocarboné en $C_1$ à $C_{12}$ ou bien deux radicaux R fixés à un même atome d'azote sont reliés entre eux pour former un radical divalent hydrocarboné en $C_2$ à $C_8$ et x est un nombre allant de 2 à 8, b) les disulfures d'alcoylphénols, c) le disulfure de morpholine et d) le N,N'-disulfure de caprolactame.

5. Procédé selon la revendication 4, caractérisé en ce que, dans la formule des polysulfures de thiurame, le radical hydrocarboné R est en $C_1$ à $C_8$.

6. Procédé selon la revendication 4 ou 5, caractérisé en ce que le radical R est un radical alcoyle, aryle ou cycloalcoyle.

7. Procédé selon l'une des revendications 1 à 6, caractérisé en ce que la composante B entrant dans la composition du produit M consiste en soufre cristallisé orthorhombique.

8. Procédé selon l'une des revendications 1 à 6, caractérisé en ce que la composante B entrant dans la composition du produit M consiste en ou renferme un ou plusieurs polysulfures d'hydrocarbyle de formule générale

$$R_1 - (S)_m - (R_3 - (S)_m)_r - R_2$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé

ou insaturé, formant un cycle avec les autres groupements d'atomes associés dans la formule, $R_3$ est un radical hydrocarboné divalent, saturé ou insaturé, en $C_1$ à $C_{20}$, les $-(S)_m$ -représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et r représente un nombre entier prenant les valeurs de zéro à 10.

**9.** Procédé selon la revendication 8, caractérisé en ce que le ou lesdits polysulfures répondent à la formule générale

$R_4 - (S)_p - R_4$

dans laquelle $R_4$ désigne un radical alcoyle en $C_6$ à $C_{16}$ et $-(S)_p-$ représente un groupement divalent formé par un enchaînement de p atomes de soufre, p étant un nombre entier allant de 2 à 5.

**10.** Procédé selon l'une des revendications 1 à 9, caractérisé en ce que le bitume a une pénétration comprise entre 5 et 500.

**11.** Procédé selon la revendication 10, caractérisé en ce que le bitume est choisi parmi les bitumes de distillation directe ou de distillation sous pression réduite et les bitumes soufflés ou semi-soufflés.

**12.** Procédé selon l'une des revendications 1 à 11, caractérisé en ce que le copolymère est choisi parmi les copolymères séquencés de styrène avec un diène conjugué choisi parmi le butadiène, l'isoprène, le chloroprène, le butadiène carboxylé et l'isoprène carboxylé.

**13.** Procédé selon l'une des revendications 1 à 12, caractérisé en ce que le copolymère a une teneur pondérale en styrène allant de 15% à 40%.

**14.** Procédé selon l'une des revendications 1 à 13, caractérisé en ce que le copolymère possède une masse moléculaire viscosimétrique moyenne comprise entre 30000 et 300000.

**15.** Procédé selon la revendication 14, caractérisé en ce que ladite masse moléculaire est située entre 70000 et 200000.

**16.** Procédé selon l'une des revendications 1 à 15, caractérisé en ce que la quantité de copolymère ajoutée au bitume est comprise entre 0,7% et 10% en poids du bitume.

**17.** Procédé selon l'une des revendications 1 à 16, caractérisé en ce que le copolymère et l'agent de couplage sont incorporés au bitume sous la forme d'une solution mère de ces deux produits dans un solvant consistant en une huile hydrocarbonée, qui présente un intervalle de distillation à pression atmosphérique compris entre 100 °C et 450 °C.

**18.** Procédé selon la revendication 17, caractérisé en ce que ledit intervalle de distillation est situé entre 150 °C et 370 °C.

**19.** Procédé selon la revendication 17 ou 18, caractérisé en ce que l'huile hydrocarbonée est choisie parmi les coupes pétrolières de caractère aromatique, les coupes pétrolières de caractère naphténo-paraffinique, les coupes pétrolières de caractère naphténo-aromatique, les coupes pétrolières de caractère paraffinique, les huiles de houille et les huiles d'origine végétale.

**20.** Procédé selon l'une des revendications 17 à 19, caractérisé en ce que la solution mère est préparée par mise en contact des ingrédients la composant, sous agitation, à des températures comprises entre 20 et 170 °C.

**21.** Procédé selon la revendication 20, caractérisé en ce que lesdites températures sont comprises entre 40 et 120 °C.

**22.** Procédé selon l'une des revendications 17 à 20, caractérisé en ce que les quantités respectives de copolymère et d'agent de couplage représentent 5% à 40% et 0,02% à 15% du poids de l'huile

hydrocarbonée.

**23.** Procédé selon la revendication 22, caractérisé en ce que la solution mère renferme 10 à 35% de copolymère et 0,1 à 5% d'agent de couplage comptés en poids de l'huile hydrocarbonée.

**24.** Procédé selon l'une des revendications 17 à 23, caractérisé en ce que l'on met en contact, à une température comprise entre 100 °C et 230 °C et sous agitation, de 80 à 95% en poids de bitume avec 20 à 5% en poids de la solution mère, cette dernière renfermant, en poids de l'huile hydrocarbonée servant de solvant, 10 à 35% de copolymère de styrène et de diène conjugué et 0,1 à 5% d'agent de couplage, puis on maintient le mélange ainsi obtenu sous agitation à une température comprise entre 100 °C et 230 °C, pendant une durée au moins égale à 10 minutes.

**25.** Procédé selon la revendication 24, caractérisé en ce que ladite durée est comprise entre 10 et 60 minutes.

**26.** Application des compositions bitume-polymère obtenues par le procédé selon l'une des revendications 1 à 25, à la réalisation de revêtements.

**27.** Application selon la revendication 26, caractérisée en ce que les revêtements réalisés sont des revêtements superficiels routiers.

**28.** Solution mère de polymère, utilisable notamment pour la préparation de compositions bitume-polymère, comprenant une huile hydrocarbonée, qui présente un intervalle de distillation à pression atmosphérique compris entre 100 °C et 450 °C, et, en solution dans cette huile, un copolymère séquencé de styrène et d'un diène conjugué et un agent de couplage, les quantités respectives du copolymère et de l'agent de couplage dans la solution représentant 5 à 40% et 0,02 à 15% du poids de l'huile hydrocarbonée, caractérisée en ce que l'agent de couplage est choisi parmi les produits M, qui sont constitués, en poids, de 1% à 100% d'une composante A consistant en un ou plusieurs accélérateurs de vulcanisation donneurs de soufre et de 99% à 0% d'une composant B consistant en un ou plusieurs agents de vulcanisation choisis parmi le soufre élémentaire et les polysulfures d'hydrocarbyle.

**29.** Solution mère selon la revendication 28, caractérisée en ce que les produits M consistent, en poids, en 10% à 100% de la composante A et en 90% à 0% de la composante B.

**30.** Solution mère selon la revendication 28 ou 29, caractérisée en ce que la composante A est celle définie dans l'une des revendications 4 à 6.

**31.** Solution mère selon l'une des revendications 28 à 30, caractérisée en ce que la composante B du produit M consiste en soufre cristallisé orthorhombique.

**32.** Solution mère selon l'une des revendications 28 à 30, caractérisée en ce que la composante B du produit M consiste en ou renferme un ou plusieurs des polysulfures d'hydrocarbyle définis dans la revendication 8

**33.** Solution mère selon la revendication 32, caractérisée en ce que le ou lesdits polysulfures sont ceux définis dans la revendication 9.

**34.** Solution mère suivant l'une des revendications 28 à 33, caractérisée en ce que le copolymère est choisi parmi les copolymères séquencés définis dans la revendication 12.

**35.** Solution mère suivant l'une des revendications 28 à 34, caractérisée en ce que le copolymère a une teneur pondérale en styrène allant de 15% à 40%.

**36.** Solution mère selon l'une des revendications 28 à 35, caractérisée en ce que le copolymère possède une masse moléculaire viscosimétrique moyenne comprise entre 30000 et 300000.

**37.** Solution mère selon la revendication 36, caractérisée en ce que ladite masse moléculaire viscosimétrique est située entre 70000 et 200000.

**38.** Solution mère selon l'une des revendications 28 à 37, caractérisée en ce que l'huile hydrocarbonée présente un intervalle de distillation à pression atmosphérique situé entre 150 °C et 370 °C.

**39.** Solution mère selon l'une des revendications 28 à 38, caractérisée en ce que l'huile hydrocarbonée est celle définie dans la revendication 19.

**40.** Solution mère selon l'une des revendications 28 à 39, caractérisée en ce qu'elle renferme 10 à 35% de copolymère et 0,1 à 5% d'agent de couplage comptés en poids de l'huile hydrocarbonée.

**41.** Solution mère selon l'une des revendications 28 à 40, préparée par mise en contact des ingrédients qui la composent, sous agitation, à des températures comprises entre 20 et 170 °C.

**42.** Solution mère selon la revendication 41, caractérisée en ce qu'elle est préparée à des températures comprises entre 40 et 120 °C.

**Revendications pour les Etats contractants suivants : ES, GR**

**1.** Procédé de préparation de compositions bitume-polymère, dans lequel on réalise, à une température comprise entre 100 °C et 230 °C, un mélange de bitume avec un copolymère séquencé de styrène et d'un diène conjugué, utilisé en quantité allant de 0,5 à 15% en poids du bitume, et un agent de couplage renfermant un composé donneur de soufre et l'on maintient le mélange obtenu, dans ledit intervalle de température et sous agitation, pendant une durée d'au moins dix minutes, caractérisé en ce que l'agent de couplage est choisi parmi les produits M, qui sont constitués, en poids, de 1% à 100% d'une composante A consistant en un ou plusieurs accélérateurs de vulcanisation donneurs de soufre et en 99% à 0% d'une composante B consistant en un ou plusieurs agents de vulcanisation choisis parmi le soufre élémentaire et les polysulfures d'hydrocarbyle, et en ce que ledit agent de couplage est utilisé en proportion propre à fournir une quantité de soufre représentant, en poids, 0,5 à 10% du copolymère utilisé pour produire la composition bitume-polymère.

**2.** Procédé selon la revendication 1, caractérisé en ce que l'agent de couplage est utilisé en proportion propre a fournir une quantité de soufre représentant, en poids, 1 à 8% du copolymère utilisé pour produire la composition bitume-polymère.

**3.** Procédé selon la revendication 1 ou 2, caractérisé en ce que les produits M consistent, en poids, en 10% à 100% de la composante A et en 90% à 0% de la composante B.

**4.** Procédé selon l'une des revendications 1 à 3, caractérisé en ce que la composante A du produit M est constituée d'un ou plusieurs accélérateurs de vulcanisation donneurs de soufre choisis dans le groupe formé par a) les polysulfures de thiurame de formule

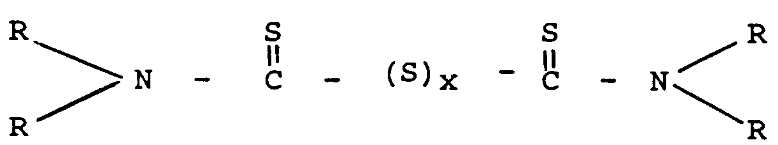

dans laquelle les R, identiques ou différents, représentent chacun un radical hydrocarboné en $C_1$ à $C_{12}$ ou bien deux radicaux R fixés à un même atome d'azote sont reliés entre eux pour former un radical divalent hydrocarboné en $C_2$ à $C_8$ et x est un nombre allant de 2 à 8, b) les disulfures d'alcoylphénols, c) le disulfure de morpholine et d) le N,N'-disulfure de caprolactame.

**5.** Procédé selon la revendication 4, caractérisé en ce que, dans la formule des polysulfures de thiurame, le radical hydrocarboné R est en $C_1$ à $C_8$.

**6.** Procédé selon la revendication 4 ou 5, caractérisé en ce que le radical R est un radical alcoyle, aryle ou cycloalcoyle.

7. Procédé selon l'une des revendications 1 à 6, caractérisé en ce que la composante B entrant dans la composition du produit M consiste en soufre cristallisé orthorhombique.

8. Procédé selon l'une des revendications 1 à 6, caractérisé en ce que la composante B entrant dans la composition du produit M consiste en ou renferme un ou plusieurs polysulfures d'hydrocarbyle de formule générale

$R_1 - (S)_m - (R_3 - (S)_m)_r - R_2$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé ou insaturé, formant un cycle avec les autres groupements d'atomes associés dans la formule, $R_3$ est un radical hydrocarboné divalent, saturé ou insaturé, en $C_1$ à $C_{20}$, les $-(S)_m$ -représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et r représente un nombre entier prenant les valeurs de zéro à 10.

9. Procédé selon la revendication 8, caractérisé en ce que le ou lesdits polysulfures répondent à la formule générale

$R_4 - (S)_p - R_4$

dans laquelle $R_4$ désigne un radical alcoyle en $C_6$ à $C_{16}$ et $-(S)_p-$ représente un groupement divalent formé par un enchaînement de p atomes de soufre, p étant un nombre entier allant de 2 à 5.

10. Procédé selon l'une des revendications 1 à 9, caractérisé en ce que le bitume a une pénétration comprise entre 5 et 500.

11. Procédé selon la revendication 10, caractérisé en ce que le bitume est choisi parmi les bitumes de distillation directe ou de distillation sous pression réduite et les bitumes soufflés ou semi-soufflés.

12. Procédé selon l'une des revendications 1 à 11, caractérisé en ce que le copolymère est choisi parmi les copolymères séquencés de styrène avec un diène conjugué choisi parmi le butadiène, l'isoprène, le chloroprène, le butadiène carboxylé et l'isoprène carboxylé.

13. Procédé selon l'une des revendications 1 à 12, caractérisé en ce que le copolymère a une teneur pondérale en styrène allant de 15% à 40%.

14. Procédé selon l'une des revendications 1 à 13, caractérisé en ce que le copolymère possède une masse moléculaire viscosimétrique moyenne comprise entre 30000 et 300000.

15. Procédé selon la revendication 14, caractérisé en ce que ladite masse moléculaire est située entre 70000 et 200000.

16. Procédé selon l'une des revendications 1 à 15, caractérisé en ce que la quantité de copolymère ajoutée au bitume est comprise entre 0,7% et 10% en poids du bitume.

17. Procédé selon l'une des revendications 1 à 16, caractérisé en ce que le copolymère et l'agent de couplage sont incorporés au bitume sous la forme d'une solution mère de ces deux produits dans un solvant consistant en une huile hydrocarbonée, qui présente un intervalle de distillation à pression atmosphérique compris entre 100 °C et 450 °C.

18. Procédé selon la revendication 17, caractérisé en ce que ledit intervalle de distillation est situé entre 150 °C et 370 °C.

19. Procédé selon la revendication 17 ou 18, caractérisé en ce que l'huile hydrocarbonée est choisie parmi les coupes pétrolières de caractère aromatique, les coupes pétrolières de caractère naphténo-paraffinique, les coupes pétrolières de caractère naphténo-aromatique, les coupes pétrolières de caractère

paraffinique, les huiles de houille et les huiles d'origine végétale.

**20.** Procédé selon l'une des revendications 17 à 19, caractérisé en ce que la solution mère est préparée par mise en contact des ingrédients la composant, sous agitation, à des températures comprises entre 20 et 170 °C.

**21.** Procédé selon la revendication 20, caractérisé en ce que lesdites températures sont comprises entre 40 et 120 °C.

**22.** Procédé selon l'une des revendications 17 à 20, caractérisé en ce que les quantités respectives de copolymère et d'agent de couplage représentent 5% à 40% et 0,02% à 15% du poids de l'huile hydrocarbonée.

**23.** Procédé selon la revendication 22, caractérisé en ce que la solution mère renferme 10 à 35% de copolymère et 0,1 à 5% d'agent de couplage comptés en poids de l'huile hydrocarbonée.

**24.** Procédé selon l'une des revendications 17 à 23, caractérisé en ce que l'on met en contact, à une température comprise entre 100 °C et 230 °C et sous agitation, de 80 à 95% en poids de bitume avec 20 à 5% en poids de la solution mère, cette dernière renfermant, en poids de l'huile hydrocarbonée servant de solvant, 10 à 35% de copolymère de styrène et de diène conjugué et 0,1 à 5% d'agent de couplage, puis on maintient le mélange ainsi obtenu sous agitation à une température comprise entre 100 °C et 230 °C, pendant une durée au moins égale à 10 minutes.

**25.** Procédé selon la revendication 24, caractérisé en ce que ladite durée est comprise entre 10 et 60 minutes.

**26.** Application des compositions bitume-polymère obtenues par le procédé selon l'une des revendications 1 à 25, à la réalisation de revêtements.

**27.** Application selon la revendication 26, caractérisée en ce que les revêtements réalisés sont des revêtements superficiels routiers.

**28.** Solution mère de polymère, utilisable notamment pour la préparation de compositions bitume-polymère, comprenant une huile hydrocarbonée, qui présente un intervalle de distillation à pression atmosphérique compris entre 100 °C et 450 °C, et, en solution dans cette huile, un copolymère séquencé de styrène et d'un diène conjugué et un agent de couplage, les quantités respectives du copolymère et de l'agent de couplage dans la solution représentant 5 à 40% et 0,02 à 15% du poids de l'huile hydrocarbonée, caractérisée en ce que l'agent de couplage est choisi parmi les produits M, qui sont constitués, en poids, de 1% à 100% d'une composante A consistant en un ou plusieurs accélérateurs de vulcanisation donneurs de soufre et de 99% à 0% d'une composant B consistant en un ou plusieurs agents de vulcanisation choisis parmi le soufre élémentaire et les polysulfures d'hydrocarbyle.

**29.** Solution mère selon la revendication 28, caractérisée en ce que les produits M consistent, en poids, en 10% à 100% de la composante A et en 90% à 0% de la composante B.

**30.** Solution mère selon la revendication 28 ou 29, caractérisée en ce que la composante A est celle définie dans l'une des revendications 4 à 6.

**31.** Solution mère selon l'une des revendications 28 à 30, caractérisée en ce que la composante B du produit M consiste en soufre cristallisé orthorhombique.

**32.** Solution mère selon l'une des revendications 28 à 30, caractérisée en ce que la composante B du produit M consiste en ou renferme un ou plusieurs des polysulfures d'hydrocarbyle définis dans la revendication 8

**33.** Solution mère selon la revendication 32, caractérisée en ce que le ou lesdits polysulfures sont ceux définis dans la revendication 9.

**34.** Solution mère suivant l'une des revendications 28 à 33, caractérisée en ce que le copolymère est choisi parmi les copolymères séquencés définis dans la revendication 12.

**35.** Solution mère suivant l'une des revendications 28 à 34, caractérisée en ce que le copolymère a une teneur pondérale en styrène allant de 15% à 40%.

**36.** Solution mère selon l'une des revendications 28 à 35, caractérisée en ce que le copolymère possède une masse moléculaire viscosimétrique moyenne comprise entre 30000 et 300000.

**37.** Solution mère selon la revendication 36, caractérisée en ce que ladite masse moléculaire viscosimétrique est située entre 70000 et 200000.

**38.** Solution mère selon l'une des revendications 28 à 37, caractérisée en ce que l'huile hydrocarbonée présente un intervalle de distillation à pression atmosphérique situé entre 150°C et 370°C.

**39.** Solution mère selon l'une des revendications 28 à 38, caractérisée en ce que l'huile hydrocarbonée est celle définie dans la revendication 19.

**40.** Solution mère selon l'une des revendications 28 à 39, caractérisée en ce qu'elle renferme 10 à 35% de copolymère et 0,1 à 5% d'agent de couplage comptés en poids de l'huile hydrocarbonée.

**41.** Solution mère selon l'une des revendications 28 à 40, préparée par mise en contact des ingrédients qui la composent, sous agitation, à des températures comprises entre 20 et 170°C.

**42.** Solution mère selon la revendication 41, caractérisée en ce qu'elle est préparée à des températures comprises entre 40 et 120°C.

**Claims**
**Claims for the following Contracting States : AT, BE, CH, DE, FR, GB, IT, LI, LU, NL, SE**

**1.** Process for preparing bitumen-polymer compositions in which there is produced, at a temperature of between 100°C and 230°C, a mixture of bitumen with a block copolymer of styrene and a conjugated diene, used in amounts ranging from 0.5 to 15 weight % of bitumen, and a coupling agent containing a sulphur-donor compound, and the resultant mixture is maintained within the stated temperature range and under agitation for at least ten minutes, characterised in that the coupling agent is selected from among the products M which consist, by weight, of 1% to 100% of a component A consisting of one or a plurality of sulphur-donor vulcanisation accelerators and of 99% to 0% of a component B consisting of one or a plurality of vulcanisation agents selected from among elementary sulphur and hydrocarbyl polysulphides; and in that the said coupling agent is used in a suitable proportion for providing a quantity of sulphur representing, by weight, 0.5 to 10% of the copolymer used to produce the bitumen-polymer composition, provided that no alkaline compound which is soluble in bitumen is added to the reactive medium when the coupling agent consists of a mixture of a sulphur-donor vulcanisation accelerator of the disulphide type and of elementary sulphur in a weight ratio of accelerator to sulphur of between 40:60 and 80:20.

**2.** Process according to Claim 1, characterised in that the coupling agent is used in a proportion suitable for providing a quantity of sulphur representing, by weight, 1 to 8% of the copolymer used to produce the bitumen-polymer composition.

**3.** Process according to Claim 1 or 2, characterised in that the products M consist, by weight, of 10% to 100% of component A and of 90% to 0% of component B.

**4.** Process according to any one of Claims 1 to 3, characterised in that component A of the product M consists of one or a plurality of sulphur-donor vulcanisation accelerators selected from the group formed by a) thiuram polysulphides of formula

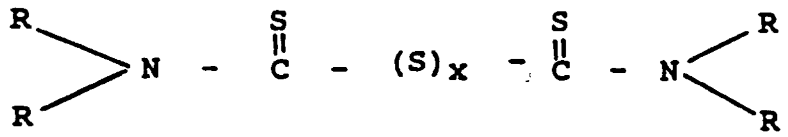

in which the groups R, which may be identical or different, each represent a $C_1$ to $C_{12}$ hydrocarbon radical, or two radicals R bonded on a given nitrogen atom are connected to one another so as to form a $C_2$ to $C_8$ divalent hydrocarbon radical, and x is a number from 2 to 8, b) alkylphenol disulphides, c) morpholine disulphide, and d) N,N'-caprolactam disulphide.

**5.** Process according to Claim 4, characterised in that, in the thiuram polysulphide formula , the hydrocarbon radical R is a $C_1$ to $C_8$ radical.

**6.** Process according to Claim 4 or 5, characterised in that the radical R is an alkyl, aryl or cycloalkyl radical.

**7.** Process according to any one of Claims 1 to 6, characterised in that component B in the composition of the product M consists of orthorhombic crystallised sulphur.

**8.** Process according to any one of Claims 1 to 6, characterised in that component B in the composition of the product M consists of or contains one or a plurality of hydrocarbyl polysulphides of the general formula

$R_1 - (S)_m - (R_3 - (S)_m)_r - R_2$

in which $R_1$ and $R_2$ each designate a saturated or unsaturated $C_1$ to $C_{20}$ monovalent hydrocarbon radical or are connected to one another to form a saturated or unsaturated $C_2$ to $C_{20}$ divalent hydrocarbon radical forming a ring with the other associated atom groups in the formula, $R_3$ is a saturated or unsaturated $C_1$ to $C_{20}$ divalent hydrocarbon radical, the $-(S)_m$ - moities represent divalent groups each formed of m sulphur atoms, wherein m can be different from one of said groups to the other and designates integers ranging from 1 to 6 with at least one m equal to or greater than 2, and r represents an integer which can have a value from zero to 10.

**9.** Process according to Claim 8, characterised in that the polysulphide(s) corresponds/correspond to the general formula

$R_4 - (S)_p - R_4$

in which $R_4$ designates a $C_6$ to $C_{16}$ alkyl radical and $-(S)_p-$ represents a divalent group formed by a chain of p sulphur atoms, p being an integer ranging from 2 to 5.

**10.** Process according to any one of Claims 1 to 9, characterised in that the bitumen has a degree of penetration of between 5 and 500.

**11.** Process according to Claim 10, characterised in that the bitumen is selected from among bitumens which are distilled directly or distilled under reduced pressure and blown or semi-blown bitumens.

**12.** Process according to any one of Claims 1 to 11, characterised in that the copolymer is selected from among block copolymers of styrene with a conjugated diene selected from among butadiene, isoprene, chloroprene, carboxylated butadiene and carboxylated isoprene.

**13.** Process according to any one of Claims 1 to 12, characterised in that the copolymer contains 15 to 40 weight % styrene.

**14.** Process according to any one of Claims 1 to 13, characterised in that the copolymer has a mean viscometric molecular mass of between 30000 and 300000.

**15.** Process according to Claim 14, characterised in that the said molecular mass is between 70000 and 200000.

**16.** Process according to any one of Claims 1 to 15, characterised in that the amount of copolymer added to the bitumen is between 0.7 and 10 weight % of the bitumen.

**17.** Process according to any one of Claims 1 to 16, characterised in that the copolymer and the coupling agent are incorporated in the bitumen in the form of a mother solution of these two products in a solvent consisting of a hydrocarbon oil which has a distillation range at atmospheric pressure of between 100 °C and 450 °C.

**18.** Process according to Claim 17, characterised in that said distillation range is between 150 °C and 370 °C.

**19.** Process according to Claim 17 or Claim 18, characterised in that the hydrocarbon oil is selected from petroleum fractions of an aromatic nature, petroleum fractions of a naphtheno-paraffin nature, petroleum fractions of a naphtheno-aromatic nature, petroleum fractions of a paraffin nature, coal oils and oils of vegetable origin.

**20.** Process according to any one of Claims 17 to 19, characterized in that the mother solution is prepared as a result of the ingredients composing said solution being brought into contact, under agitation, at temperatures of between 20 and 170 °C.

**21.** Process according to Claim 20, characterized in that said temperatures are between 40 and 120 °C.

**22.** Process according to any one of Claims 17 to 20, characterised in that the respective quantities of copolymer and coupling agent represent 5 to 40 weight % and 0.02 to 15 weight % of the hydrocarbon oil.

**23.** Process according to Claim 22, characterised in that the mother solution contains 10 to 35% copolymer and 0.1 to 5% coupling agent calculated relative to the weight of the hydrocarbon oil.

**24.** Process according to any one of Claims 17 to 23, characterised in that 80 to 95 weight % of bitumen is brought into contact with 20 to 5 weight % of the mother solution at a temperature of between 100 °C and 230 °C and under agitation, the mother solution containing, by weight relative to the hydrocarbon oil used as solvent, 10 to 35% styrene and conjugated diene copolymer and 0.1 to 5% coupling agent, and the resultant mixture is then maintained under agitation at a temperature of between 100 °C and 230 °C for a period of at least 10 minutes.

**25.** Process according to Claim 24, characterised in that said period is between 10 and 60 minutes.

**26.** Application of the bitumen-polymer compositions obtained by the process according to any one of Claims 1 to 25 in the production of coatings.

**27.** Application according to Claim 26, characterised in that the produced coatings are road surfacings.

**28.** Polymer mother solution which can be used in particular for the preparation of bitumen-polymer compositions, comprising a hydrocarbon oil having a distillation range at atmospheric pressure of between 100 °C and 450 °C and, in solution in this oil, a block copolymer of styrene and a conjugated diene and a coupling agent, the respective quantities of the copolymer and of the coupling agent in the solution representing 5 to 40% and 0.02 to 15 weight % of the hydrocarbon oil, characterised in that the coupling agent is selected from among the products M which consist, by weight, of 1% to 100% of a component A consisting of one or a plurality of sulphur-donor vulcanisation accelerators and of 99% to 0% of a component B consisting of one or a plurality of vulcanisation agents selected from among elementary sulphur and hydrocarbyl polysulphides.

**29.** Mother solution according to Claim 28, characterised in that the products M consist, by weight, of 10% to 100% of component A and of 90% to 0% of component B.

30. Mother solution according to Claim 28 or 29, characterised in that component A is the component defined in any one of Claims 4 to 6.

31. Mother solution according to any one of Claims 28 to 30, characterised in that component B of the product M consists of orthorhombic crystallised sulphur.

32. Mother solution according to any one of Claims 28 to 30, characterised in that component B of the product M consists of or contains one or a plurality of the hydrocarbyl polysulphides defined in Claim 8.

33. Mother solution according to Claim 32, characterised in that the polysulphide(s) is/are that/those defined in Claim 9.

34. Mother solution according to any one of Claims 28 to 33, characterised in that the copolymer is selected from among the block copolymers defined in Claim 12.

35. Mother solution according to any one of Claims 28 to 34, characterised in that the copolymer contains 15 to 40 weight % styrene.

36. Mother solution according to any one of Claims 28 to 35, characterised in that the copolymer has a mean viscometric molecular mass of between 30000 and 300000.

37. Mother solution according to Claim 36, characterised in that the said viscometric molecular mass is between 70000 and 200000.

38. Mother solution according to any one of Claims 28 to 37, characterised in that the hydrocarbon oil has a distillation range at atmospheric pressure of between 150 °C and 370 °C.

39. Mother solution according to any one of Claims 28 to 38, characterised in that the hydrocarbon oil is that which is defined in Claim 19.

40. Mother solution according to any one of Claims 28 to 39, characterised in that it contains 10 to 35% copolymer and 0.1 to 5% coupling agent calculated by weight relative to the hydrocarbon oil.

41. Mother solution according to any one of Claims 28 to 40, prepared by the bringing into contact of the ingredients which constitute said solution, under agitation, at temperatures of between 20 and 170 °C.

42. Mother solution according to Claim 41, characterised in that it is prepared at temperatures of between 40 and 120 °C.

**Claims for the following Contracting States : ES, GR**

1. Process for preparing bitumen-polymer compositions in which there is produced, at a temperature of between 100 °C and 230 °C, a mixture of bitumen with a block copolymer of styrene and a conjugated diene, used in amounts ranging from 0.5 to 15 weight % of bitumen, and a coupling agent containing a sulphur-donor compound, and the resultant mixture is maintained within the stated temperature range and under agitation for at least ten minutes, characterized in that the coupling agent is selected from among the products M which consist, by weight, of 1% to 100% of a component A consisting of one or a plurality of sulphur-donor vulcanisation accelerators and of 99% to 0% of a component B consisting of one or a plurality of vulcanisation agents selected from among elementary sulphur and hydrocarbyl polysulphides; and in that the said coupling agent is used in a suitable proportion for providing a quantity of sulphur representing, by weight, 0.5 to 10% of the copolymer used to produce the bitumen-polymer composition.

2. Process according to Claim 1, characterised in that the coupling agent is used in a proportion suitable for providing a quantity of sulphur representing, by weight, 1 to 8% of the copolymer used to produce the bitumen-polymer composition.

**3.** Process according to Claim 1 or 2, characterised in that the products M consist, by weight, of 10% to 100% of component A and of 90% to 0% of component B.

**4.** Process according to any one of Claims 1 to 3, characterised in that component A of the product M consists of one or a plurality of sulphur-donor vulcanisation accelerators selected from the group formed by a) thiuram polysulphides of formula

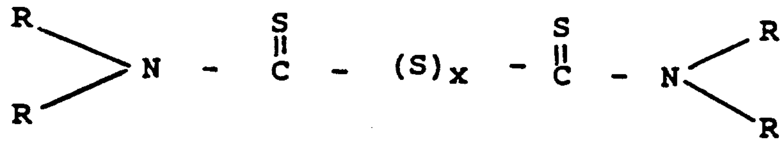

in which the groups R, which may be identical or different, each represent a $C_1$ to $C_{12}$ hydrocarbon radical, or two radicals R bonded on a given nitrogen atom are connected to one another so as to form a $C_2$ to $C_8$ divalent hydrocarbon radical, and x is a number from 2 to 8, b) alkylphenol disulphides, c) morpholine disulphide, and d) N,N'-caprolactam disulphide.

**5.** Process according to Claim 4, characterised in that, in the thiuram polysulphide formula , the hydrocarbon radical R is a $C_1$ to $C_8$ radical.

**6.** Process according to Claim 4 or 5, characterised in that the radical R is an alkyl, aryl or cycloalkyl radical.

**7.** Process according to any one of Claims 1 to 6, characterised in that component B in the composition of the product M consists of orthorhombic crystallised sulphur.

**8.** Process according to any one of Claims 1 to 6, characterised in that component B in the composition of the product M consists of or contains one or a plurality of hydrocarbyl polysulphides of the general formula

$$R_1 - (S)_m - (R_3 - (S)_m)_r - R_2$$

in which $R_1$ and $R_2$ each designate a saturated or unsaturated $C_1$ to $C_{20}$ monovalent hydrocarbon radical or are connected to one another to form a saturated or unsaturated $C_2$ to $C_{20}$ divalent hydrocarbon radical forming a ring with the other associated atom groups in the formula, $R_3$ is a saturated or unsaturated $C_1$ to $C_{20}$ divalent hydrocarbon radical, the $-(S)_m-$ moities represent divalent groups each formed of m sulphur atoms, wherein m can be different from one of said groups to the other and designates integers ranging from 1 to 6 with at least one m equal to or greater than 2, and r represents an integer which can have a value from zero to 10.

**9.** Process according to Claim 8, characterised in that the polysulphide(s) corresponds/correspond to the general formula

$$R_4 - (S)_p - R_4$$

in which $R_4$ designates a $C_6$ to $C_{16}$ alkyl radical and $-(S)_p-$ represents a divalent group formed by a chain of p sulphur atoms, p being an integer ranging from 2 to 5.

**10.** Process according to any one of Claims 1 to 9, characterised in that the bitumen has a degree of penetration of between 5 and 500.

**11.** Process according to Claim 10, characterised in that the bitumen is selected from among bitumens which are distilled directly or distilled under reduced pressure and blown or semi-blown bitumens.

**12.** Process according to any one of Claims 1 to 11, characterised in that the copolymer is selected from among block copolymers of styrene with a conjugated diene selected from among butadiene, isoprene, chloroprene, carboxylated butadiene and carboxylated isoprene.

**13.** Process according to any one of Claims 1 to 12, characterised in that the copolymer contains 15 to 40 weight % styrene.

**14.** Process according to any one of Claims 1 to 13, characterised in that the copolymer has a mean viscometric molecular mass of between 30000 and 300000.

**15.** Process according to Claim 14, characterised in that the said molecular mass is between 70000 and 200000.

**16.** Process according to any one of Claims 1 to 15, characterised in that the amount of copolymer added to the bitumen is between 0.7 and 10 weight % of the bitumen.

**17.** Process according to any one of Claims 1 to 16, characterised in that the copolymer and the coupling agent are incorporated in the bitumen in the form of a mother solution of these two products in a solvent consisting of a hydrocarbon oil which has a distillation range at atmospheric pressure of between 100 °C and 450 °C.

**18.** Process according to Claim 17, characterised in that said distillation range is between 150 °C and 370 °C.

**19.** Process according to Claim 17 or Claim 18, characterised in that the hydrocarbon oil is selected from petroleum fractions of an aromatic nature, petroleum fractions of a naphtheno-paraffin nature, petroleum fractions of a naphtheno-aromatic nature, petroleum fractions of a paraffin nature, coal oils and oils of vegetable origin.

**20.** Process according to any one of Claims 17 to 19, characterised in that the mother solution is prepared as a result of the ingredients composing said solution being brought into contact, under agitation, at temperatures of between 20 and 170 °C.

**21.** Process according to Claim 20, characterised in that said temperatures are between 40 and 120 °C.

**22.** Process according to any one of Claims 17 to 20, characterised in that the respective quantities of copolymer and coupling agent represent 5 to 40 weight % and 0.02 to 15 weight % of the hydrocarbon oil.

**23.** Process according to Claim 22, characterised in that the mother solution contains 10 to 35% copolymer and 0.1 to 5% coupling agent calculated relative to the weight of the hydrocarbon oil.

**24.** Process according to any one of Claims 17 to 23, characterised in that 80 to 95 weight % of bitumen is brought into contact with 20 to 5 weight % of the mother solution at a temperature of between 100 °C and 230 °C and under agitation, the mother solution containing, by weight relative to the hydrocarbon oil used as solvent, 10 to 35% styrene and conjugated diene copolymer and 0.1 to 5% coupling agent, and the resultant mixture is then maintained under agitation at a temperature of between 100 °C and 230 °C for a period of at least 10 minutes.

**25.** Process according to Claim 24, characterised in that said period is between 10 and 60 minutes.

**26.** Application of the bitumen-polymer compositions obtained by the process according to any one of Claims 1 to 25 in the production of coatings.

**27.** Application according to Claim 26, characterised in that the produced coatings are road surfacings.

**28.** Polymer mother solution which can be used in particular for the preparation of bitumen-polymer compositions, comprising a hydrocarbon oil having a distillation range at atmospheric pressure of

between 100 °C and 450 °C and, in solution in this oil, a block copolymer of styrene and a conjugated diene and a coupling agent, the respective quantities of the copolymer and of the coupling agent in the solution representing 5 to 40% and 0.02 to 15 weight % of the hydrocarbon oil, characterised in that the coupling agent is selected from among the products M which consist, by weight, of 1% to 100% of a component A consisting of one or a plurality of sulphur-donor vulcanisation accelerators and of 99% to 0% of a component B consisting of one or a plurality of vulcanisation agents selected from among elementary sulphur and hydrocarbyl polysulphides.

**29.** Mother solution according to Claim 28, characterised in that the products M consist, by weight, of 10% to 100% of component A and of 90% to 0% of component B.

**30.** Mother solution according to Claim 28 or 29, characterised in that component A is the component defined in any one of Claims 4 to 6.

**31.** Mother solution according to any one of Claims 28 to 30, characterised in that component B of the product M consists of orthorhombic crystallized sulphur.

**32.** Mother solution according to any one of Claims 28 to 30, characterised in that component B of the product M consists of or contains one or a plurality of the hydrocarbyl polysulphides defined in Claim 8.

**33.** Mother solution according to Claim 32, characterised in that the polysulphide(s) is/are that/those defined in Claim 9.

**34.** Mother solution according to any one of Claims 28 to 33, characterised in that the copolymer is selected from among the block copolymers defined in Claim 12.

**35.** Mother solution according to any one of Claims 28 to 34, characterised in that the copolymer contains 15 to 40 weight % styrene.

**36.** Mother solution according to any one of Claims 28 to 35, characterised in that the copolymer has a mean viscometric molecular mass of between 30000 and 300000.

**37.** Mother solution according to Claim 36, characterised in that the said viscometric molecular mass is between 70000 and 200000.

**38.** Mother solution according to any one of Claims 28 to 37, characterised in that the hydrocarbon oil has a distillation range at atmospheric pressure of between 150 °C and 370 °C.

**39.** Mother solution according to any one of Claims 28 to 38, characterised in that the hydrocarbon oil is that which is defined in Claim 19.

**40.** Mother solution according to any one of Claims 28 to 39, characterised in that it contains 10 to 35% copolymer and 0.1 to 5% coupling agent calculated by weight relative to the hydrocarbon oil.

**41.** Mother solution according to any one of Claims 28 to 40, prepared by the bringing into contact of the ingredients which constitute said solution, under agitation, at temperatures of between 20 and 170 °C.

**42.** Mother solution according to Claim 41, characterised in that it is prepared at temperatures of between 40 and 120 °C.

**Patentansprüche**
**Patentansprüche für folgende Vertragsstaaten : AT, BE, CH, DE, FR, GB, IT, LI, LU, NL, SE**

**1.** Verfahren zur Herstellung von Bitumen-Polymer-Zusammensetzungen, bei dem man bei einer Temperatur zwischen 100 und 230 °C Bitumen mit einem Blockcopolymer aus Styrol und einem konjugierten Dien in einer Menge von 0,5 bis 15 %, bezogen auf das Gewicht des Bitumen, und einem Kupplungsmittel mischt, das eine Schwefel spendende Verbindung enthält und das erhaltene Gemisch innerhalb

des angeführten Temperaturbereichs und unter Rühren während wenigstens 10 Minuten hält, dadurch **gekennzeichnet,** daß das Kupplungsmittel ausgewählt wird unter den Stoffen M, die, bezogen auf das Gewicht, zusammengesetzt sind aus 1 bis 100 % einer Komponente A, bestehend aus einem oder mehreren Schwefel spendenden Vulkanisationsbeschleunigern und 99 bis 0 % einer Komponente B, bestehend aus einem oder mehreren Vulkanisationsmitteln, ausgewählt unter elementarem Schwefel und Kohlenwasserstoffpolysulfiden, und das Kupplungsmittel in einer Menge verwendet wird, die geeignet ist, eine Schwefelmenge von 0,5 bis 10 %, bezogen auf das Gewicht des zur Herstellung der Bitumen-Polymer-Zusammensetzung verwendeten Copolymers, zu liefern, mit der Maßgabe, daß dem Reaktionsmedium keine im Bitumen lösliche Alkaliverbindung zugesetzt wird, wenn das Kupplungsmittel aus einem Gemisch aus einem Schwefel spendenden Vulkanisationsbeschleuniger vom Disulfidtyp und elementarem Schwefel bei einem Gewichtsverhältnis von Beschleuniger : Schwefel zwischen 40:60 und 80:20 besteht.

**2.** Verfahren nach Anspruch 1, dadurch **gekennzeichnet,** daß das Kupplungsmittel in einer Menge verwendet wird, die geeignet ist, eine Schwefelmenge von 1 bis 8 %, bezogen auf das Gewicht des zur Herstellung der Bitumen-Polymer-Zusammensetzung verwendeten Copolymers,zu liefern.

**3.** Verfahren nach Anspruch 1 oder 2, dadurch **gekennzeichnet,** daß die Stoffe M aus 10 bis 100 Gew.-% der Komponente A und aus 90 bis 0 Gew.-% der Komponente B bestehen.

**4.** Verfahren nach einem der Ansprüche 1 bis 3, dadurch **gekennzeichnet,** daß die Komponente A des Stoffes M zusammengesetzt ist aus einem oder mehreren Schwefel spendenden Vulkanisationsbeschleunigern, ausgewählt aus der Gruppe, bestehend aus

a) Thiurampolysulfiden der Formel

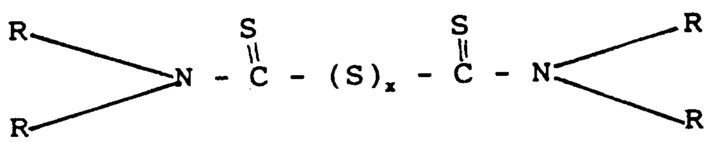

worin die Reste R gleiche oder verschiedene Bedeutungen haben und einen $C_{1-12}$-Kohlenwasserstoffrest bedeuten, oder zwei Reste R, die an ein und dasselbe Stickstoffatom gebunden sind, miteinander so verknüpft sind, daß sie einen zweiwertigen $C_{2-8}$-Wasserstoffrest bilden und x eine Zahl von 2 bis 8 darstellt,

b) Alkylphenoldisulfiden,

c) Morpholindisulfid und

d) Caprolactam-N,N'-disulfid.

**5.** Verfahren nach Anspruch 4, dadurch **gekennzeichnet,** daß in der Formel der Thiurampolysulfide der Kohlenwasserstoffrest R ein $C_{1-8}$-Rest ist.

**6.** Verfahren nach Anspruch 4 oder 5, dadurch **gekennzeichnet,** daß der Rest R ein Alkyl-, Aryl- oder Cycloalkylrest ist.

**7.** Verfahren nach einem der Ansprüche 1 bis 6, dadurch **gekennzeichnet,** daß die Komponente B des Stoffes M aus orthorhombischem kristallinem Schwefel besteht.

**8.** Verfahren nach einem der Ansprüche 1 bis 6, dadurch **gekennzeichnet,** daß die Komponente B des Stoffes M aus einem oder mehreren Kohlenwasserstoffpolysulfiden der allgemeinen Formel

$$R_1 - (S)_m - (R_3 - (S)_m)_r - R_2$$

besteht oder diese enthält, worin $R_1$ und $R_2$ jeweils einen einwertigen gesättigten oder ungesättigten $C_{1-20}$-Kohlenwasserstoffrest bedeuten oder miteinander so verknüpft sind, daß sie einen zweiwertigen gesättigten oder ungesättigten $C_{2-20}$-Kohlenwasserstoffrest bilden, wobei sie mit den übrigen Atomgruppen in der Formel einen Ring entstehen lassen, $R_3$ einen zweiwertigen gesättigten oder ungesät-

tigten $C_{1-20}$-Kohlenwasserstoffrest bedeutet, die Gruppen - $(S)_m$ - zweiwertige, jeweils durch m S-Atome gebildete Gruppen darstellen, wobei m von Gruppe zu Gruppe verschieden sein kann und eine ganze Zahl von 1 bis 6 bedeutet, wobei mindestens eines der Symbole m für 2 oder eine darüberliegende Zahl steht und r eine ganze Zahl von 0 bis 10 bedeutet.

**9.** Verfahren nach Anspruch 8, dadurch **gekennzeichnet,** daß das Polysulfid bzw. die Polysulfide der allgemeinen Formel

$R_4$ - $(S)_p$ - $R_4$

bedeutet, worin $R_4$ einen $C_{6-16}$-Alkylrest und die Gruppe -$(S)_p$- eine zweiwertige, durch Verknüpfung von p S-Atomen gebildete Gruppe darstellt, wobei p eine ganze Zahl von 2 bis 5 bedeutet.

**10.** Verfahren nach einem der Ansprüche 1 bis 9, dadurch **gekennzeichnet,** daß das Bitumen ein Durchdringungsvermögen zwischen 5 und 500 aufweist.

**11.** Verfahren nach Anspruch 10, dadurch **gekennzeichnet,** daß das Bitumen ausgewählt wird unter Bitumina der Direkt- oder Vakuumdestillation und geblasenen oder halbgeblasenen Bitumina.

**12.** Verfahren nach einem der Ansprüche 1 bis 11, dadurch **gekennzeichnet,** daß das Copolymer ausgewählt wird unter den Blockcopolymeren aus Styrol und einem konjugierten Dien, ausgewählt unter Butadien, Isopren, Chloropren, carboxyliertem Butadien und carboxyliertem Isopren.

**13.** Verfahren nach einem der Ansprüche 1 bis 12, dadurch **gekennzeichnet,** daß das Copolymer 15 bis 40 Gew.-% Styrol enthält.

**14.** Verfahren nach einem der Ansprüche 1 bis 13, dadurch **gekennzeichnet,** daß das Copolymer eine viskosimetrische Durchschnittsmolekularmasse zwischen 30.000 und 300.000 aufweist.

**15.** Verfahren nach Anspruch 14, dadurch **gekennzeichnet,** daß die Molekularmasse zwischen 70.000 und 200.000 liegt.

**16.** Verfahren nach einem der Ansprüche 1 bis 15, dadurch **gekennzeichnet,** daß die dem Bitumen zugesetzte Menge an Copolymer 0,7 bis 10 %, bezogen auf das Gewicht des Bitumens, ausmacht.

**17.** Verfahren nach einem der Ansprüche 1 bis 16, dadurch **gekennzeichnet,** daß das Copolymer und das Kupplungsmittel in das Bitumen in Form der Mutterlauge dieser beiden Stoffe in einem Lösungsmittel eingearbeitet werden, das in einem Kohlenwasserstofföl besteht, das einen Destillationsbereich bei Atmosphärendruck zwischen 100 und 450 ° C darstellt.

**18.** Verfahren nach Anspruch 17, dadurch **gekennzeichnet,** daß der Destillationsbereich zwischen 150 und 370 ° C liegt.

**19.** Verfahren nach Anspruch 17 oder 18, dadurch **gekennzeichnet,** daß das Kohlenwasserstofföl ausgewählt wird unter aromatischen Erdölfraktionen, Naphthen-paraffinischen Erdölfraktionen, Naphthen-aromatischen Erdölfraktionen, paraffinischen Erdölfraktionen, Steinkohle- und Pflanzenölen.

**20.** Verfahren nach einem der Ansprüche 17 bis 19, dadurch **gekennzeichnet,** daß die Mutterlauge hergestellt wird durch Kontaktierung der Verbindungskomponenten unter Rühren bei Temperaturen zwischen 20 und 170 ° C.

**21.** Verfahren nach Anspruch 20, dadurch **gekennzeichnet,** daß die Temperaturen zwischen 40 und 120 ° C liegen.

**22.** Verfahren nach einem der Ansprüche 17 bis 20, dadurch **gekennzeichnet,** daß die Menge an Copolymer 5 bis 40 % und die Menge an Kupplungsmittel 0,02 bis 15 %, bezogen auf das Gewicht des Kohlenwasserstofföls, betragen.

**23.** Verfahren nach Anspruch 22, dadurch **gekennzeichnet,** daß die Mutterlauge 10 bis 35 % Copolymer und 0,1 bis 5 % Kupplungsmittel, bezogen auf das Gewicht des Kohlenwasserstofföls, enthält.

**24.** Verfahren nach einem der Ansprüche 17 bis 23, dadurch **gekennzeichnet,** daß man bei einer Temperatur zwischen 100 und 230 ° C und unter Rühren 80 bis 95 Gew.-% Bitumen mit 20 bis 5 Gew.-% Mutterlauge in Berührung bringt, wobei letztere, bezogen auf das Gewicht des als Lösungsmittel dienenden Kohlenwasserstofföls, 10 bis 35 % Copolymer aus Styrol und konjugiertem Dien und 0,1 bis 5 % Kupplungsmittel enthält, und dann das auf diese Weise erhaltene Gemisch unter Rühren bei einer Temperatur zwischen 100 und 230 ° C während wenigstens 10 Minuten hält.

**25.** Verfahren nach Anspruch 24, dadurch **gekennzeichnet,** daß die Haltedauer 10 bis 60 Minuten beträgt.

**26.** Verwendung der nach dem Verfahren nach einem der Ansprüche 1 bis 25 erhaltenen Bitumen-Polymer-Zusammensetzungen für die Herstellung von Belägen.

**27.** Verwendung nach Anspruch 26, dadurch **gekennzeichnet,** daß die hergestellten Beläge oberflächliche Straßenbeläge sind.

**28.** Polymermutterlauge, die insbesondere für die Herstellung von Bitumen-Polymer-Zusammensetzungen geeignet ist und ein Kohlenwasserstofföl, das einen Destillationsbereich bei Atmosphärendruck zwischen 100 und 450 ° C darstellt, und in diesem Öl gelöst ein Blockcopolymer aus Styrol und einem konjugierten Dien und ein Kupplungsmittel enthält, wobei die Menge an Copolymer 5 bis 40 % und die Menge an Kupplungsmittel in der Lösung 0,02 bis 15 %, bezogen jeweils auf das Gewicht des Kohlenwasserstofföls, ausmachen, dadurch **gekennzeichnet,** daß das Kupplungsmittel ausgewählt ist unter den Stoffen M, die, bezogen auf das Gewicht, zusammengesetzt sind aus 1 bis 100 % einer Komponente A, bestehend aus einem oder mehreren Schwefel spendenden Vulkanisationsbeschleunigern und 99 bis 0 % einer Komponente B, bestehend aus einem oder mehreren Vulkanisationsmitteln, ausgewählt unter elementarem Schwefel und Kohlenwasserstoffpolysulfiden.

**29.** Mutterlauge nach Anspruch 28, dadurch **gekennzeichnet,** daß die Stoffe M aus 10 bis 100 Gew.-% der Komponente A und 90 bis 0 Gew.-% der Komponente B bestehen.

**30.** Mutterlauge nach Anspruch 28 oder 29, dadurch **gekennzeichnet,** daß die Komponente A die in einem der Ansprüche 4 bis 6 definierte ist.

**31.** Mutterlauge nach einem der Ansprüche 28 bis 30, dadurch **gekennzeichnet,** daß die Komponente B des Stoffes M aus orthorhombischem kristallinem Schwefel besteht.

**32.** Mutterlauge nach einem der Ansprüche 28 bis 30, dadurch **gekennzeichnet,** daß die Komponente B des Stoffes M aus einem oder mehreren Kohlenwasserstoffpolysulfiden, wie sie in Anspruch 8 definiert sind, besteht.

**33.** Mutterlauge nach Anspruch 32, dadurch **gekennzeichnet,** daß die Polysulfide die in Anspruch 9 definierten sind.

**34.** Mutterlauge nach einem der Ansprüche 28 bis 33, dadurch **gekennzeichnet,** daß das Copolymer ausgewählt ist unter den in Anspruch 12 definierten Blockcopolymeren.

**35.** Mutterlauge nach einem der Ansprüche 28 bis 34, dadurch **gekennzeichnet,** daß das Copolymer 15 bis 40 Gew.-% Styrol enthält.

**36.** Mutterlauge nach einem der Ansprüche 28 bis 35, dadurch **gekennzeichnet,** daß das Copolymer eine viskosimetrische Durchschnittsmolekularmasse zwischen 30.000 und 300.000 aufweist.

**37.** Mutterlauge nach Anspruch 36, dadurch **gekennzeichnet,** daß die viskosimetrische Molekularmasse zwischen 70.000 und 200.000 liegt.

**38.** Mutterlauge nach einem der Ansprüche 28 bis 37, dadurch **gekennzeichnet,** daß das Kohlenwasserstofföl einen Destillationsbereich bei Atmosphärendruck zwischen 150 und 370 ° C aufweist.

**39.** Mutterlauge nach einem der Ansprüche 28 bis 38, dadurch **gekennzeichnet,** daß das Kohlenwasserstofföl das in Anspruch 19 definierte ist.

**40.** Mutterlauge nach einem der Ansprüche 28 bis 39, dadurch **gekennzeichnet,** daß sie 10 bis 35 % Copolymer und 0,1 bis 5 % Kupplungsmittel, bezogen auf das Gewicht des Kohlenwasserstofföls, enthält.

**41.** Mutterlauge nach einem der Ansprüche 28 bis 40, hergestellt durch Kontaktierung der sie zusammensetzenden Komponenten unter Rühren bei Temperaturen zwischen 20 und 170 ° C.

**42.** Mutterlauge nach Anspruch 41, dadurch **gekennzeichnet,** daß diese hergestellt wurde bei Temperaturen zwischen 40 und 120 ° C.

**Patentansprüche für folgende Vertragsstaaten : ES, GR**

**1.** Verfahren zur Herstellung von Bitumen-Polymer-Zusammensetzungen, bei dem man bei einer Temperatur zwischen 100 und 230 ° C Bitumen mit einem Blockcopolymer aus Styrol und einem konjugierten Dien in einer Menge von 0,5 bis 15 %, bezogen auf das Gewicht des Bitumen, und einem Kupplungsmittel mischt, das eine Schwefel spendende Verbindung enthält, und das erhaltene Gemisch innerhalb des angeführten Temperaturbereichs und unter Rühren während wenigstens 10 Minuten hält, dadurch **gekennzeichnet,** daß das Kupplungsmittel ausgewählt wird unter den Stoffen M, die, bezogen auf das Gewicht, zusammengesetzt sind aus 1 bis 100 % einer Komponente A, bestehend aus einem oder mehreren Schwefel spendenden Vulkanisationsbeschleunigern und 99 bis 0 % einer Komponente B, bestehend aus einem oder mehreren Vulkanisationsmitteln, ausgewählt unter elementarem Schwefel und Kohlenwasserstoffpolysulfiden, und das Kupplungsmittel in einer Menge verwendet wird, die geeignet ist, eine Schwefelmenge von 0,5 bis 10 %, bezogen auf das Gewicht des zur Herstellung der Bitumen-Polymer-Zusammensetzung verwendeten Copolymers, zu liefern .

**2.** Verfahren nach Anspruch 1, dadurch **gekennzeichnet,** daß das Kupplungsmittel in einer Menge verwendet wird, die geeignet ist, eine Schwefelmenge von 1 bis 8 %, bezogen auf das Gewicht des zur Herstellung der Bitumen-Polymer-Zusammensetzung verwendeten Copolymers, zu liefern.

**3.** Verfahren nach Anspruch 1 oder 2, dadurch **gekennzeichnet,** daß die Stoffe M aus 10 bis 100 Gew.-% der Komponente A und aus 90 bis 0 Gew.-% der Komponente B bestehen.

**4.** Verfahren nach einem der Ansprüche 1 bis 3, dadurch **gekennzeichnet,** daß die Komponente A des Stoffes M zusammengesetzt ist aus einem oder mehreren Schwefel spendenden Vulkanisationsbeschleunigern, ausgewählt aus der Gruppe, bestehend aus

a) Thiurampolysulfiden der Formel

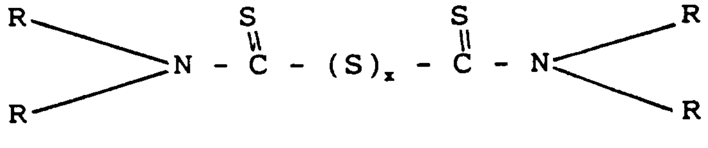

worin die Reste R gleiche oder verschiedene Bedeutungen haben und einen $C_{1-12}$-Kohlenwasserstoffrest bedeuten, oder zwei Reste R, die an ein und dasselbe Stickstoffatom gebunden sind, miteinander so verknüpft sind, daß sie einen zweiwertigen $C_{2-8}$-Wasserstoffrest bilden und x eine Zahl von 2 bis 8 darstellt,

b) Alkylphenoldisulfiden,

c) Morpholindisulfid und

d) Caprolactam-N,N'-disulfid.

5. Verfahren nach Anspruch 4, dadurch **gekennzeichnet,** daß in der Formel der Thiurampolysulfide der Kohlenwasserstoffrest R ein $C_{1-8}$-Rest ist.

6. Verfahren nach Anspruch 4 oder 5, dadurch **gekennzeichnet,** daß der Rest R ein Alkyl-, Aryl- oder Cycloalkylrest ist.

7. Verfahren nach einem der Ansprüche 1 bis 6, dadurch **gekennzeichnet,** daß die Komponente B des Stoffes M aus orthorhombischem kristallinem Schwefel besteht.

8. Verfahren nach einem der Ansprüche 1 bis 6, dadurch **gekennzeichnet,** daß die Komponente B des Stoffes M aus einem oder mehreren Kohlenwasserstoffpolysulfiden der allgemeinen Formel

$$R_1 - (S)_m - (R_3 - (S)_m)_r - R_2$$

besteht oder diese enthält, worin $R_1$ und $R_2$ jeweils einen einwertigen gesättigten oder ungesättigten $C_{1-20}$-Kohlenwasserstoffrest bedeuten oder miteinander so verknüpft sind, daß sie einen zweiwertigen gesättigten oder ungesättigten $C_{2-20}$-Kohlenwasserstoffrest bilden, wobei sie mit den übrigen Atomgruppen in der Formel einen Ring entstehen lassen, $R_3$ einen zweiwertigen gesättigten oder ungesättigten $C_{1-20}$-Kohlenwasserstoffrest bedeutet, die Gruppen - $(S)_m$ - zweiwertige, jeweils durch m S-Atome gebildete Gruppen darstellen, wobei m von Gruppe zu Gruppe verschieden sein kann und eine ganze Zahl von 1 bis 6 bedeutet, wobei mindestens eines der Symbole m für 2 oder eine darüberliegende Zahl steht und r eine ganze Zahl von 0 bis 10 bedeutet.

9. Verfahren nach Anspruch 8, dadurch **gekennzeichnet,** daß das Polysulfid bzw. die Polysulfide der allgemeinen Formel

$$R_4 - (S)_p - R_4$$

bedeutet, worin $R_4$ einen $C_{6-16}$-Alkylrest und die Gruppe - $(S)_p$- eine zweiwertige, durch Verknüpfung von p S-Atomen gebildete Gruppe darstellt, wobei p eine ganze Zahl von 2 bis 5 bedeutet.

10. Verfahren nach einem der Ansprüche 1 bis 9, dadurch **gekennzeichnet,** daß das Bitumen ein Durchdringungsvermögen zwischen 5 und 500 aufweist.

11. Verfahren nach Anspruch 10, dadurch **gekennzeichnet,** daß das Bitumen ausgewählt wird unter Bitumina der Direkt- oder Vakuumdestillation und geblasenen oder halbgeblasenen Bitumina.

12. Verfahren nach einem der Ansprüche 1 bis 11, dadurch **gekennzeichnet,** daß das Copolymer ausgewählt wird unter den Blockcopolymeren aus Styrol und einem konjugierten Dien, ausgewählt unter Butadien, Isopren, Chloropren, carboxyliertem Butadien und carboxyliertem Isopren.

13. Verfahren nach einem der Ansprüche 1 bis 12, dadurch **gekennzeichnet,** daß das Copolymer 15 bis 40 Gew.-% Styrol enthält.

14. Verfahren nach einem der Ansprüche 1 bis 13, dadurch **gekennzeichnet,** daß das Copolymer eine viskosimetrische Durchschnittsmolekularmasse zwischen 30.000 und 300.000 aufweist.

15. Verfahren nach Anspruch 14, dadurch **gekennzeichnet,** daß die Molekularmasse zwischen 70.000 und 200.000 liegt.

16. Verfahren nach einem der Ansprüche 1 bis 15, dadurch **gekennzeichnet,** daß die dem Bitumen zugesetzte Menge an Copolymer 0,7 bis 10 %, bezogen auf das Gewicht des Bitumens, ausmacht.

17. Verfahren nach einem der Ansprüche 1 bis 16, dadurch **gekennzeichnet,** daß das Copolymer und das Kupplungsmittel in das Bitumen in Form der Mutterlauge dieser beiden Stoffe in einem Lösungsmittel eingearbeitet werden, das in einem Kohlenwasserstofföl besteht, das einen Destillationsbereich bei Atmosphärendruck zwischen 100 und 450 °C darstellt.

**18.** Verfahren nach Anspruch 17, dadurch **gekennzeichnet,** daß der Destillationsbereich zwischen 150 und 370 ° C liegt.

**19.** Verfahren nach Anspruch 17 oder 18, dadurch **gekennzeichnet,** daß das Kohlenwasserstofföl ausgewählt wird unter aromatischen Erdölfraktionen, Naphthen-paraffinischen Erdölfraktionen, Naphthen-aromatischen Erdölfraktionen, paraffinischen Erdölfraktionen, Steinkohle- und Pflanzenölen.

**20.** Verfahren nach einem der Ansprüche 17 bis 19, dadurch **gekennzeichnet,** daß die Mutterlauge hergestellt wird durch Kontaktierung der Verbindungskomponenten unter Rühren bei Temperaturen zwischen 20 und 170 ° C.

**21.** Verfahren nach Anspruch 20, dadurch **gekennzeichnet,** daß die Temperaturen zwischen 40 und 120 ° C liegen.

**22.** Verfahren nach einem der Ansprüche 17 bis 20, dadurch **gekennzeichnet,** daß die Menge an Copolymer 5 bis 40 % und die Menge an Kupplungsmittel 0,02 bis 15 %, bezogen auf das Gewicht des Kohlenwasserstofföls, betragen.

**23.** Verfahren nach Anspruch 22, dadurch **gekennzeichnet,** daß die Mutterlauge 10 bis 35 % Copolymer und 0,1 bis 5 % Kupplungsmittel, bezogen auf das Gewicht des Kohlenwasserstofföls, enthält.

**24.** Verfahren nach einem der Ansprüche 17 bis 23, dadurch **gekennzeichnet,** daß man bei einer Temperatur zwischen 100 und 230 ° C und unter Rühren 80 bis 95 Gew.-% Bitumen mit 20 bis 5 Gew.-% Mutterlauge in Berührung bringt, wobei letztere, bezogen auf das Gewicht des als Lösungsmittel dienenden Kohlenwasserstofföls, 10 bis 35 % Copolymer aus Styrol und konjugiertem Dien und 0,1 bis 5 % Kupplungsmittel enthält, und dann das auf diese Weise erhaltene Gemisch unter Rühren bei einer Temperatur zwischen 100 und 230 ° C während wenigstens 10 Minuten hält.

**25.** Verfahren nach Anspruch 24, dadurch **gekennzeichnet,** daß die Haltedauer 10 bis 60 Minuten beträgt.

**26.** Verwendung der nach dem Verfahren nach einem der Ansprüche 1 bis 25 erhaltenen Bitumen-Polymer-Zusammensetzungen für die Herstellung von Belägen.

**27.** Verwendung nach Anspruch 26, dadurch **gekennzeichnet,** daß die hergestellten Beläge oberflächliche Straßenbeläge sind.

**28.** Polymermutterlauge, die insbesondere für die Herstellung von Bitumen-Polymer-Zusammensetzungen geeignet ist und ein Kohlenwasserstofföl, das einen Destillationsbereich bei Atmosphärendruck zwischen 100 und 450 ° C darstellt, und in diesem Öl gelöst ein Blockcopolymer aus Styrol und einem konjugierten Dien und ein Kupplungsmittel enthält, wobei die Menge an Copolymer 5 bis 40 % und die Menge an Kupplungsmittel in der Lösung 0,02 bis 15 %, bezogen jeweils auf das Gewicht des Kohlenwasserstofföls, ausmachen, dadurch **gekennzeichnet,** daß das Kupplungsmittel ausgewählt ist unter den Stoffen M, die, bezogen auf das Gewicht, zusammengesetzt sind aus 1 bis 100 % einer Komponente A, bestehend aus einem oder mehreren Schwefel spendenden Vulkanisationsbeschleunigern und 99 bis 0 % einer Komponente B, bestehend aus einem oder mehreren Vulkanisationsmitteln, ausgewählt unter elementarem Schwefel und Kohlenwasserstoffpolysulfiden.

**29.** Mutterlauge nach Anspruch 28, dadurch **gekennzeichnet,** daß die Stoffe M aus 10 bis 100 Gew.-% der Komponente A und 90 bis 0 Gew.-% der Komponente B bestehen.

**30.** Mutterlauge nach Anspruch 28 oder 29, dadurch **gekennzeichnet,** daß die Komponente A die in einem der Ansprüche 4 bis 6 definierte ist.

**31.** Mutterlauge nach einem der Ansprüche 28 bis 30, dadurch **gekennzeichnet,** daß die Komponente B des Stoffes M aus orthorhombischem kristallinem Schwefel besteht.

**32.** Mutterlauge nach einem der Ansprüche 28 bis 30, dadurch **gekennzeichnet,** daß die Komponente B des Stoffes M aus einem oder mehreren Kohlenwasserstoffpolysulfiden, wie sie in Anspruch 8 definiert

sind, besteht.

**33.** Mutterlauge nach Anspruch 32, dadurch **gekennzeichnet,** daß die Polysulfide die in Anspruch 9 definierten sind.

**34.** Mutterlauge nach einem der Ansprüche 28 bis 33, dadurch **gekennzeichnet,** daß das Copolymer ausgewählt ist unter den in Anspruch 12 definierten Blockcopolymeren.

**35.** Mutterlauge nach einem der Ansprüche 28 bis 34, dadurch **gekennzeichnet,** daß das Copolymer 15 bis 40 Gew.-% Styrol enthält.

**36.** Mutterlauge nach einem der Ansprüche 28 bis 35, dadurch **gekennzeichnet,** daß das Copolymer eine viskosimetrische Durchschnittsmolekularmasse zwischen 30.000 und 300.000 aufweist.

**37.** Mutterlauge nach Anspruch 36, dadurch **gekennzeichnet,** daß die viskosimetrische Molekularmasse zwischen 70.000 und 200.000 liegt.

**38.** Mutterlauge nach einem der Ansprüche 28 bis 37, dadurch **gekennzeichnet,** daß das Kohlenwasserstofföl einen Destillationsbereich bei Atmosphärendruck zwischen 150 und 370 °C aufweist.

**39.** Mutterlauge nach einem der Ansprüche 28 bis 38, dadurch **gekennzeichnet,** daß das Kohlenwasserstofföl das in Anspruch 19 definierte ist.

**40.** Mutterlauge nach einem der Ansprüche 28 bis 39, dadurch **gekennzeichnet,** daß sie 10 bis 35 % Copolymer und 0,1 bis 5 % Kupplungsmittel, bezogen auf das Gewicht des Kohlenwasserstofföls, enthält.

**41.** Mutterlauge nach einem der Ansprüche 28 bis 40, hergestellt durch Kontaktierung der sie zusammensetzenden Komponenten unter Rühren bei Temperaturen zwischen 20 und 170 °C.

**42.** Mutterlauge nach Anspruch 41, dadurch **gekennzeichnet,** daß diese hergestellt wurde bei Temperaturen zwischen 40 und 120 °C.